# EUROPÄISCHE PATENTSCHRIFT

(11) **EP 2 198 610 B1**
(45) Veröffentlichungstag und Bekanntmachung des Hinweises auf die Patenterteilung: **29.10.2014**
(21) Anmeldenummer: 08804080.3
(22) Anmeldetag: 12.09.2008
(51) Int. Cl.: H04N 19/70, H04N 19/174, H04N 19/467, H04N 21/2343, H04N 21/2365, H04N 21/434, H04N 21/647

(54) **VERFAHREN UND VORRICHTUNG ZUM ERSTELLEN EINES KODIERTEN AUSGANGSVIDEOSTROMS AUS MINDESTENS ZWEI KODIERTEN EINGANGSVIDEOSTRÖMEN, SOWIE VERWENDUNG DER VORRICHTUNG**
METHOD AND DEVICE FOR ESTABLISHING A CODED OUTPUT VIDEO STREAM FROM AT LEAST TWO CODED INPUT VIDEO STREAMS AND USE OF THE DEVICE
PROCÉDÉ ET DISPOSITIF PERMETTANT DE CRÉER UN FLUX VIDÉO DE SORTIE CODÉ À PARTIR D'AU MOINS DEUX FLUX VIDÉO D'ENTRÉE CODÉS, UTILISATION DU DISPOSITIF

(30) Priorität: 15.10.2007 DE 102007049351
(43) Veröffentlichungstag der Anmeldung: 23.06.2010
(73) Patentinhaber: Siemens Aktiengesellschaft, 80333 München (DE)
(72) Erfinder: AMON, Peter, 81675 München (DE); HUTTER, Andreas, 81673 München (DE)
(86) Internationale Anmeldenummer: PCT/EP2008/062115
(87) Internationale Veröffentlichungsnummer: WO 2009/049974

(56) Entgegenhaltungen:
- WO-A-03/049418
- WO-A-2007/076486
- WO-A-2007/095640
- CA-A1- 2 615 459
- US-A1- 2005 231 588
- US-A1- 2006 146 734
- "Advanced video coding for generic audiovisual services; H.264 (05/03)" ITU-T STANDARD SUPERSEDED (S), INTERNATIONAL TELECOMMUNICATION UNION, GENEVA, CH, Nr. H.264 (05/03), 30. Mai 2003 (2003-05-30), XP017401452

## Beschreibung

Die Erfindung betrifft ein Verfahren und eine Vorrichtung zum Erstellen eines kodierten Ausgangsvideostroms aus mindestens zwei kodierten Eingangsvideoströmen zum gemeinsamen Darstellen von jeweils einem ersten Bild der kodierten Eingangsvideoströme in einem zweiten Bild des kodierten Ausgangsvideostroms. Die Erfindung betrifft ferner auch eine Verwendung der Vorrichtung und einen kodierten Eingangsvideostrom.

In den vergangenen Jahren haben videobasierte Anwendungen, beispielsweise für Überwachungsanlagen oder im Rahmen von Videokonferenzen, zugenommen. Dabei sollen oftmals mehrere Videoströme an einem Endgerät gleichzeitig angezeigt werden. Bei einer Videokonferenz mit mehr als zwei Teilnehmern wird dabei nicht nur einer der Teilnehmer zu einem Zeitpunkt zu sehen zu sein, wie beispielsweise dies bei einer Technologie "Voice Activated Switching" verwendet wird, sondern zwei oder alle Gesprächspartner sind gleichzeitig an dem jeweiligen Endgerät abgebildet. Dies wird als "Continuous Presence" bezeichnet. In einem weiteren Beispiel aus dem Bereich der Videoüberwachung sollen auf einem Kontrollmonitor mehrere Videoströme gleichzeitig dargestellt werden. Verfügt das Überwachungssystem in dem Kontrollraum lediglich über einen Videodecoder, dann kann zu einem Zeitpunkt lediglich eines der Überwachungsvideos dekodiert und angezeigt werden.

Zur Realisierung der "Continuous Presence" sind mehrere Lösungen bereits bekannt. Eine erste Lösung verwendet mehrere Videodecoder in den Endgeräten, wodurch zwei oder mehrere parallel empfangene Videoströme dekodiert und angezeigt werden können. Diese Lösung zeigt die Nachteile, dass zum einen eine Implementierung mehrerer Videodecoder in einem Endgerät kostenintensiv ist und zum anderen eine Vielzahl von Videokonferenz-Endgeräten im Einsatz ist, die lediglich über einen Videodecoder verfügen.

Eine zweite bekannte Lösung ist eine Verwendung einer Videobrücke bzw. Videokonferenzkontrolleinheit, auch bekannt als Multipoint Conference Unit (MCU). Diese Videobrücke stellt eine zentrale Einheit dar, die zunächst die enkodierten Videoströme aller Teilnehmer der Videokonferenz erhält und für jeden Teilnehmer einen dedizierten kodierten Videostrom erzeugt. Dazu werden die empfangenen Videoströme vollständig dekodiert und dann entsprechend den Anforderungen der jeweiligen Gesprächsteilnehmer zusammengefügt und anschließend jeweils neu enkodiert. Diese Transkodierung ist sehr komplex und wird vielfach in Hardware implementiert, was zu hohen Gerätekosten führt. Ferner ergeben sich durch die Transkodierung Verzögerungen aufgrund einer Vielzahl von Signalverarbeitungsschritten. Schließlich führt die Transkodierung zu einer verminderten Qualität des neu erzeugten Videostroms.

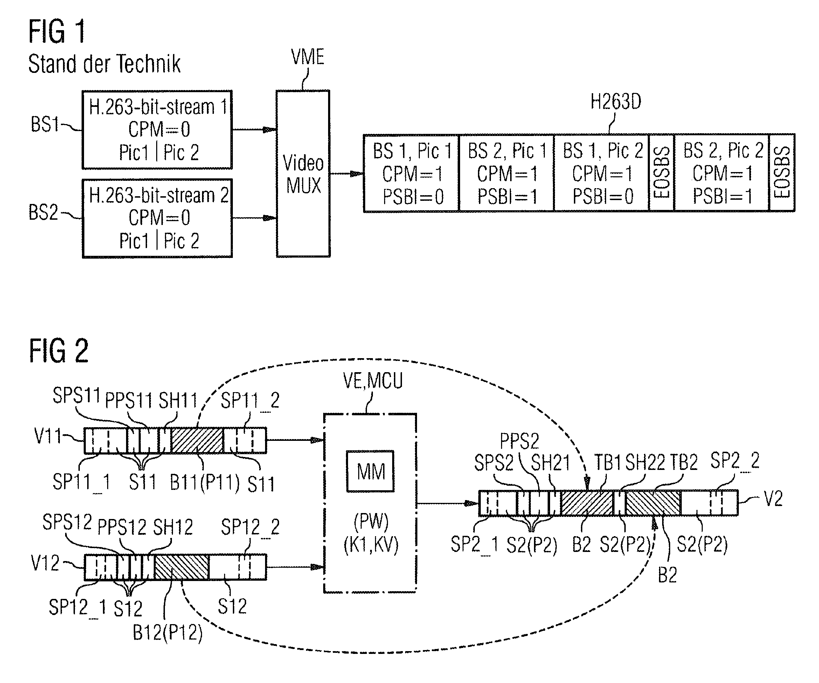

In einem Standard ITU H.263 Annex C wird eine weitere Lösung angegeben. Hierbei werden mehrere unabhängige H.263-kodierte Videoströme in einen Datenstrom geschrieben. Mit Hilfe von Figur 1 wird die Vorgehensweise gemäß dem zitierten Stand der Technik näher erläutert.

Figur 1 zeigt zwei H.263-kodierte Bitströme BS1, BS2. Diese werden mit Hilfe einer Videomultiplexeinheit VME in den Datenstrom H.263D gemultiplext. Damit ein H.263-konformer Videodecoder erkennen kann, dass sich in dem Datenstrom zwei Teildatenströme "Sub-Bitstreams" befinden, wird das so genannte CPM-Flag (CPM - Continuous Presence Multipoint) gesetzt. Dieses CPM-Flag befindet sich im "Picture Header" jedes kodierten Bildes. Im Falle von kodierten H.263 Videoströmen mit nur einem Videostrom, wie beispielsweise die jeweiligen kodierten Videoströme BS1 und BS2, ist das CPM-Flag = 0. Werden mehrere H.263-Videoströme gemultiplext, so wird das CPM-Flag zu CPM = 1 gesetzt und ferner ein Steuerparameter PSBI (PSBI - Picture Sub-Bitstreamindicator) als Index zur Identifizierung des jeweiligen Teildatenstroms gesetzt. Der Standard H.263 erlaubt maximal vier Teildatenströme. In Figur 1 ist dabei zu erkennen, dass der Teildatenstrom des kodierten Videostroms BS1 in dem Datenstrom H.263D mit PSBI = 0 und die des kodierten Videostroms BS2 mit PSBI = 1 indiziert werden.

Eine ähnliche Indizierung findet auch auf GOB-Ebene (GOB - Group of Block) mittels eines Steuerungsparameters GSBI (GSBI - GOB Sub-Bitstream Indicator) oder auf Slice-Ebene mittels eines Steuerparameters SSBI (SSBI - Slice Sub-Bitstream Indicator) statt. Damit ist ein noch feineres Multiplexen der Teildatenströme möglich. Ferner wird das Ende eines Teildatenstroms innerhalb des Datenstroms H.263D mittels eines weiteren Steuerparameters ESBI (ESBI - Ending Sub-Bitstream Indicator) angezeigt.

Durch die vorgestellte Multiplex-Methode des Standards H.263 Annex C werden lediglich zwei oder mehrere H.263-enkodierte Videoströme in einen Datenstrom gemultiplext. Das bedeutet, dass zur Darstellung von zwei oder mehreren dieser enkodierten Videoströme zwei beziehungsweise mehrere unabhängige Videodecoder benötigt werden. Da eine Implementierung des Standards H.263 Annex C eine hohe Komplexität und somit hohe Kosten nach sich zieht, wie bspw. eine Implementierung unabhängiger Videodecoder mit eigenen Bildspeichern, ist dieser Annex C selten in Endgeräten implementiert.

Die Druckschrift US 2006/0146734 A1 beschreibt ein Verfahren zur Erzeugung eines kodierten Ausgangsvideostroms basierend auf einer Kombination von kodierten Eingangsvideoströmen. Im Rahmen dieses Verfahrens werden Felder von Headern in den Bilddaten der Videoströme verändert.

Das Dokument US 2005/0231588 A1 beschreibt ein Videokonferenzsystem, bei dem die Videobilder mehrerer Konferenzteilnehmer zu einem zusammengesetzten Videobild verknüpft werden. Dabei werden in einem Frame des zusammengesetzten Videobilds immer nur die Videodaten eines Konferenzteilnehmers aktualisiert.

In dem Dokument WO 03/049418 A1 ist ein Verfahren zum Mischen von kodierten Videoströmen beschrieben, bei dem Signalisierungsparameter in Eingangsvideoströmen verändert werden können. Im Rahmen der Erzeugung eines kodierten Ausgangsvideostroms werden insbesondere die Header von Eingangsvideoströmen ersetzt.

Die Druckschrift WO 2007/076486 A2 beschreibt ein Videokonferenzsystem, bei dem aus mehreren Eingangsvideoströmen ein Ausgangsvideostrom generiert wird, wobei zur Kodierung der Videoströme skalierbare Videokodiertechniken verwendet werden.

Des Weiteren ist die Syntax von Signalisierungsparametern aus den Kapiteln 7.3, 7.4 und D.2.19 des ITu-T Standards H.264 (05/2003) bekannt.

Aufgabe der Erfindung ist es, ein Verfahren und eine Vorrichtung anzugeben, mit denen kodierten Bilddaten von mindestens zwei kodierten Eingangsvideoströmen in einen einzigen kodierten Ausgangsvideostrom überführt werden können, ohne dass eine Transkodierung der kodierten Bilddaten durchgeführt werden muss und gleichzeitig ein Datenvolumen des erzeugten kodierten Ausgangsvideostrom gering gehalten werden kann.

Diese Aufgabe wird durch die Merkmale der unabhängigen Ansprüche gelöst. Weiterbildungen der Erfindung sind in den abhängigen Ansprüchen wiedergegeben.

Die Erfindung betrifft ein Verfahren zum Erstellen eines kodierten Ausgangsvideostroms aus zumindest zwei kodierten Eingangsvideoströmen zum gemeinsamen Darstellen von jeweils einem ersten Bild der kodierten Eingangsvideoströme in einem zweiten Bild des kodierten Ausgangsvideostroms, bei dem
- die kodierten Eingangsvideoströme jeweils erste kodierte Bilddaten und jeweils erste Signalisierungsdaten umfassen, wobei die jeweiligen ersten kodierten Bilddaten jeweils für das erste Bild kodierte Bildinformation aufweisen;
- der kodierte Ausgangsvideostrom und die kodierten Eingangsvideoströme ein identisches Farbformat, eine identische Bitauflösung je kodiertem Bildpunkt und eine identische Bildabtastung aufweisen und mit einem identischen Videokodierverfahren kodiert werden;
- das Videokodierverfahren zumindest einen Kodiermodus aufweist, bei dem die, das zweite Bild beschreibenden, zweiten kodierten Bilddaten des kodierten Ausgangsvideostroms in separierbare kodierte Teilbilddaten einteilbar sind;
- der kodierte Ausgangsvideostrom mit zweiten Signalisierungsdaten und den zweiten kodierten Bilddaten derart erstellt wird, dass
   - die zweiten kodierten Bilddaten durch Kopieren jeweils eines der ersten kodierten Bilddaten gleichzeitig darzustellender erster Bilder in jeweils eines der kodierten Teilbilddaten des zweiten Bildes generiert werden;
   - die zweiten Signalisierungsdaten zumindest teilweise auf Basis der ersten Signalisierungsdaten generiert werden.

Erfindungsgemäß werden die ersten Signalisierungsdaten jeweils durch erste Signalisierungsparameter und die zweiten Signalisierungsdaten durch zweite Signalisierungsparameter dargestellt, wobei korrespondierende erste Signalisierungsparameter der jeweiligen kodierten Eingangsvideoströme dahingehend analysiert werden, ob diese einen identischen Parameterwert aufweisen, wobei für den Fall, dass korrespondierende erste Signalisierungsparameter den identischen Parameterwert aufweisen, der identische Parameterwert dem zu den analysierten ersten Signalisierungsparametern korrespondierenden zweiten Signalisierungsparameter zugewiesen wird.

Durch die Erfindung wird in vorteilhafter Weise erreicht, dass nicht alle zweiten Signalisierungsdaten neu berechnet werden müssen, sondern zumindest ein Teil davon direkt durch Kopieren aus den ersten Signalisierungsdaten generiert werden kann. Dies reduziert die benötigte Zeit und Rechenkomplexität zum Erstellen des Ausgangsvideostroms.

Die Erfindung zeigt ferner die Vorteile, dass zum Erstellen des kodierten Ausgangsvideostroms die ersten kodierten Bilddaten der kodierten Eingangsvideoströme ohne eine Transkodierung durch zeitsparendes und Rechenkomplexität-sparendes Kopieren direkt übernommen werden können. Ferner ist ein Datenvolumen des kodierten Ausgangsvideostroms gegenüber einem Multiplexen ganzer kodierter Eingangsvideoströme gering, da die zweiten Signalisierungsdaten ein erheblich geringes Datenvolumen aufweisen als eine Summe der ersten Signalisierungsdaten aller kodierter Eingangsvideoströme. Zudem wird durch das Kopieren der ersten Bilddaten in die zweiten Bilddaten erreicht, dass ein ansonsten durch die Transcodierung entstehender Bildqualitätsverlust vermieden wird. Schließlich kann die Erzeugung des kodierten Ausgangsvideostroms derart gesteuert werden, dass durch Hinzunahme mehr oder weniger kodierter Eingangsvideoströme eine Datenrate des kodierten Ausgangsvideostroms an zur Verfügung stehende Übertragungsbandbreiten individuell und dynamisch angepasst werden kann.

Im Rahmen dieser Erfindung werden unter ersten bzw. zweiten kodierten Bilddaten Informationen verstanden, die eine jeweilige Bildinformation in komprimierter Form umfassen, wie bspw. Bewegungsvektoren und transformierte, quantisierte und Entropie-kodierte Bild- und Differenzbildinformation. Unter ersten bzw. zweiten Signalisierungsdaten sind diejenigen Informationen der jeweiligen kodierten Eingangsvideoströme bzw. des Ausgangsvideostroms zu verstehen, die administrative Informationen umfassen, wie bspw. Bildgröße, Bildnummer oder Quantisierungsparameter.

In einer vorzugsweisen Weiterbildung des Verfahrens weisen die kodierten Eingangsvideoströme jeweils mehrere erste Bilder auf, und der kodierte Ausgangsvideostrom wird durch ein jeweiliges Erzeugen der für ein jeweiliges Bildpaar der kodierten Eingangsvideoströme gültigen zweiten Signalisierungsdaten und zweiten kodierten Bilddaten auf Grundlage von ersten Bilddaten und ersten Signalisierungsdaten erstellt.

Hierdurch wird es ermöglicht, dass aus Bildfolgen der kodierten Eingangsvideoströme Bildfolgen des kodierten Ausgangsvideostroms in vorteilhafter Weise generiert werden können.

In einer Weiterbildung werden für ein zweites Bild, bei dem die kodierten Teilbilddaten übereinander angeordnet werden, zweite Signalisierungsparameter der zweiten Signalisierungsdaten für die unten angeordneten kodierten Teilbilddaten derart generiert, dass eine Adresse eines ersten Bildblocks, insbesondere eines Makroblocks oben links, der unten angeordneten kodierten Teilbilddaten aus einer um einen Wert Eins höheren Adresse eines letzten Bildblocks, insbesondere eines Makroblocks unten links, der oben angeordneten kodierten Teilbilddaten generiert wird. Hierdurch wird es möglich, in besonders einfacher Weise zwei als erste kodierte Bilddaten vorliegende Bildinformationen in dem kodierten Ausgangsvideostrom zu erstellen.

In einer Weiterbildung des Verfahrens werden ein jeweiliger erster Signalisierungsparameter, der jeweils einen Offset eines Quantisierungsparameters in den ersten Signalisierungsdaten beschreibt, analysiert, falls zumindest zwei der analysierten ersten Signalisierungsparameter unterschiedlich sind, ein Unterschiedswert der analysierten ersten Signalisierungsparameter ermittelt, der Unterschiedswert als weiterer Signalisierungsparameter in einen zweiten Signalisierungsparameter der zweiten Signalisierungsdaten eingefügt, wobei der eingefügte Signalisierungsparameter denjenigen kodierten Teilbilddaten zugeordnet wird, bei denen eine Addition des analysierten Signalisierungsparameters in den ersten Signalisierungsdaten mit dem Unterschiedswert einem der anderen analysierten ersten Signalisierungsparameter entspricht.

Diese Weiterbildung der Erfindung ermöglicht, dass auch erste kodierte Bilddaten im Rahmen des Verfahrens verwendet werden können, die unterschiedliche Offsets des jeweiligen Quantisierungsparameters aufweisen.

In einer Weiterbildung der Erfindung wird ein jeweiliger erster Signalisierungsparameter, der jeweils eine maximale Anzahl an zu berücksichtigenden Referenzbildern in dem jeweiligen kodierten Eingangsstrom beschreibt, in den ersten Signalisierungsdaten analysiert, wobei derjenige Signalisierungsparameter aus den analysierten ersten Signalisierungsparametern ausgewählt wird, der einen höchsten Parameterwert aufweist, und wobei der ausgewählte Signalisierungsparameter in die zweiten Signalisierungsdaten eingefügt wird. So können auch kodierte Eingangsvideoströme im Rahmen des Verfahrens eingesetzt werden, die eine unterschiedliche maximale Anzahl an zu berücksichtigenden Referenzbildern aufweisen.

In einer vorzugsweisen Weiterbildung wird ein jeweiliger erster Signalisierungsparameter, der jeweils eine explizite bzw. implizite Steuerung eines Deblocking-Filters beschreibt, in den ersten Signalisierungsdaten analysiert, wobei, falls sowohl explizite als auch implizite Steuerung durch das Analyseergebnis angezeigt wird, in die zu den kodierten Teilbilddaten gehörenden zweiten Signalisierungsdaten als Signalisierungsparameter die explizite Signalisierung eingefügt wird. Diese Vorgehensweise erlaubt auch kodierte Eingangsvideoströme einzusetzen, die eine unterschiedliche Steuerung des Deblocking-Filters vorsehen.

Vorzugsweise wird zur Erstellung der zweiten kodierten Bilddaten für das zweite Bild jeweils ein erstes Bild der kodierten Eingangsvideoströme derart ausgewählt, dass die zu den ersten Bildern gehörenden ersten kodierten Bilddaten in einem identischen Prädiktionsmodus, insbesondere INTER-Kodierung, INTRA-Kodierung oder bi-direktionale Kodierung, vorliegen. Hierdurch können in besonders effizienter und einfacher Weise die zweiten Signalisierungsdaten generiert werden.

In einer Weiterbildung der Erfindung werden als Kodiermodus des Videokodierverfahrens ein Slice-Modus gewählt und durch den Slice-Modus jeweils einem der kodierten Teilbilddaten ein Slice zugeordnet. Diese Vorgehensweise ermöglicht eine einfache Zuordnung der ersten kodierten Bilddaten zu zweiten kodierten Bilddaten.

In einer vorzugsweisen Weiterbildung wird als Kodiermodus des Videokodierverfahrens ein Slice-Group-Modus gewählt und durch den Slice-Group-Modus jeweils einem der kodierten Teilbilddaten eine Slice-Gruppe zugeordnet. Hiermit wird für die zweiten kodierten Bilddaten ein Kodiermodus verwendet, der eine flexible Anordnung einer Darstellung der durch die Teilbilddaten beschriebenen ersten Bilder in dem zweiten Bild zulässt. Als Videokodierverfahren kann ein Standard ITU H.264 eingesetzt wird, wobei ein Slice-Group-Modus zum Bilden der kodierten Teilbilddaten verwendet wird.

Im Allgemeinen kann als Kodierverfahren einer der Standards ITU H.264, ITU H.263 oder SVC verwendet werden, wodurch eine kostengünstige und kurzfristige Verwendung des Verfahrens erzielt wird, da die genannten Videokodierstandards einen hohen Verbreitungsgrad aufweisen.

Vorzugsweise werden die kodierten Eingangsvideoströme durch Extraktion von Base Layer Information von SVC-kodierten Eingangströmen erzeugt. Dies zeigt den Vorteil, dass auch kodierte Eingangsströme eines zum kodierten Ausgangsvideostrom unterschiedlichen Videokodierstandards im Rahmen des vorliegenden Verfahrens eingesetzt werden können.

In einer vorzugsweisen Weiterbildung werden die kodierten Eingangsvideoströme auf Basis einer Base Layer Information und zumindest einer Enhancement Layer Information von SVC-kodierten Eingangströmen erzeugt, wobei die extrahierten Layer Informationen einen identischen Aufbau der örtlichen und SNR-Schichten aufweisen. So können in Abhängigkeit von vorgebbaren Bedingungen, wie zur Verfügung-stehende Bandbreiten oder geforderte Bildqualitäten, die kodierten Eingangsvideoströme aus SVC-kodierten Eingangströmen generiert werden.

In einer vorzugsweisen Weiterbildung werden ein oder mehrere der kodierten Eingangsvideoströme zum Erstellen des kodierten Ausgangsvideostroms eingesetzt, die jeweils einen Signalisierungsparameter aufweisen, der angibt, dass eine Prädiktion zur Kodierung des jeweiligen ersten Bildes ausschließlich innerhalb einer Bildgrenze des ersten Bildes durchgeführt wurde. Dies hat den Vorteil, dass Bildqualitätsstörungen aufgrund von fehlerhaften Dekodierentscheidungen an einem Bildrand vermieden werden können. Hierbei kann der Signalisierungsparameter insbesondere mit Hilfe einer SEI-Nachricht gemäß Videokodierstandard H.264 in folgender Form erzeugt werden:

```
mixing_info(payloadSize) {
 constraint_inter_pred_flag
 }
```

wobei das Feld "payloadSize" eine Größe der SEI-Nachricht beschreibt und ein vorgebbarer Wert des Felds "constraint_inter_pred_flag" anzeigt, dass eine Prädiktion zur Kodierung des jeweiligen ersten Bildes ausschließlich innerhalb einer Bildgrenze des ersten Bildes durchgeführt wurde. Diese SEI-Nachricht (SEI - Supplemental Enhancement Information) kann standard-konform die Weiterbildung signalisieren.

Die Erfindung betrifft ferner eine Vorrichtung zum Erstellen eines kodierten Ausgangsvideostroms aus zumindest zwei kodierten Eingangsvideoströmen zum gemeinsamen Darstellen von jeweils einem ersten Bild der kodierten Eingangsvideoströme in einem zweiten Bild des kodierten Ausgangsvideostroms, bei dem die Vorrichtung zumindest ein Mittel aufweist, wobei dieses Mittel derart ausgestaltet ist, dass das erfindungsgemäße Verfahren durchführbar ist. Die Vorrichtung ermöglicht somit eine Implementierung und Ausführung des erfindungsgemäßen Verfahrens.

Ferner ist Teil der Erfindung eine Verwendung der Vorrichtung, wobei die Vorrichtung in einer Videokonferenzkontrolleinheit zur Verbindung von zumindest zwei Endgeräten verwendet wird.

Schließlich ist der kodierte Eingangsvideostrom zur Verwendung in dem erfindungsgemäßen Verfahren oder in der vorstehenden Vorrichtung Teil der Erfindung, wobei der kodierte Eingangsvideostrom zum Erstellen des kodierten Ausgangsvideostroms derart generiert wird, das er einen Signalisierungsparameter aufweist, der angibt, dass eine Prädiktion zur Kodierung eines jeweiligen ersten Bildes ausschließlich innerhalb einer Bildgrenze des ersten Bildes durchgeführt wird.

Die Erfindung und ihre Weiterbildungen werden anhand nachfolgender Zeichnungen näher erläutert. Im Einzelnen zeigen:
- Figur 1: eine Verwendung von Sub-Bitstreams bei einem Standard H. 264 Annex C;
- Figur 2: eine schematische Anordnung für ein Ausführungsbeispiel bei Verwendung eines Kodiermodus "Slice-Modus";
- Figuren 3A, 3B: ein beispielhaftes zweites Sequenzparameterset für das Ausführungsbeispiel nach Figur 2;
- Figuren 4A, 4B: ein beispielhaftes zweites Bildparameterset für das Ausführungsbeispiel nach Figur 2;
- Figur 5: eine Übersicht von Bildnummern für eine Anpassung der Wiedergabe- und der Dekodierreihenfolge;
- Figur 6: eine vertikale Anordnung von kodierten Teilbilddaten mittels "Slice-Modus" nach einer Dekodierung;
- Figuren 7A, 7B: ein beispielhaftes zweites Sequenzparameterset für ein Ausführungsbeispiel bei Verwendung eines "Slice-Group-Modus";
- Figuren 8A, 8B: ein beispielhaftes zweites Bildparameterset für das Ausführungsbeispiel bei Verwendung eines "Slice-Group-Modus";
- Figur 9: eine horizontale Anordnung von kodierten Teilbilddaten mittels "Slice-Group-Modus" nach einer Dekodierung;
- Figur 10: eine Anordnung mehrerer kodierter Teilbilddaten mit Hilfe des "Slice-Group-Modus";
- Figur 11: eine Anordnung bei kombinierter Verwendung des "Slice-Modus" und des "Slice-Group-Modus" zur Darstellung mehrere Slices pro Slice-Group;
- Figur 12: eine weitere Anordnung mit unterschiedlich großen, durch die kodierten Teilbilddaten , repräsentierten ersten Bildern;
- Figur 13: eine weitere Anordnung von durch die kodierten Teilbilddaten repräsentierten ersten Bildern;
- Figur 14: eine schematische Anordnung eines weiteren Ausführungsbeispiels.

Elemente mit gleicher Funktion und Wirkungsweise sind in den Figuren mit denselben Bezugszeichen versehen.

In Folgenden wird die Erfindung anhand mehrerer Ausführungsbeispiele basierend auf heute gängigen Videokodierverfahren beziehungsweise Videokodierstandards näher erläutert.

Ein durch eine Kamera aufgenommenes Bild, beispielsweise im Format YUV422, umfasst eine Mehrzahl von Bildpunkten. Bei den heutigen gängigen Videokodierverfahren werden die Bildpunkte blockweise, beispielsweise mit 4x4 oder 16x16 Bildpunkten, zusammengefasst und enkodiert beziehungsweise komprimiert. Derartige Bildblöcke sind auch unter einem Namen Makroblöcke bekannt. Bei der Kodierung wird der jeweilige Bildblock einer INTRA-Kodierung oder INTER-Kodierung unterworfen. Bei der INTRA-Kodierung wird der Bildblock ohne Zuhilfenahme bereits kodierter Bildinformation kodiert. Dabei wird beispielsweise der Bildblock einer zweidimensionalen diskreten Cosiuns-Transformation DCT unterworfen, die daraus entstehenden Koeffizienten quantisiert und die quantisierten Koeffizienten mittels einer Entropiekodierung, beispielsweise einer Huffman-Kodierung, weiterverarbeitet. Bei der INTER-Kodierung stützt sich die Kodierung auf bereits kodierte Bildblöcke, beispielsweise in einem zum aktuell zu kodierenden Bild vorangegangenen oder nachfolgenden Bild, und/oder zu bereits kodierter Bildinformation innerhalb des aktuell zu kodierenden Bildes. Bei der INTER-Kodierung wird zunächst durch eine Bewegungsschätzung oder eine sonstige Prädiktionsvorschrift ein Prädiktionsvektor oder Prädiktionsmodus ermittelt. Aufgrund des ermittelten Prädiktionsvektors bzw. Prädiktionsmodus ergibt sich ein Prädiktionssignal, das von dem Bildsignal des aktuell zu kodierenden Bildblocks subtrahiert wird, wodurch ein Restfehlersignal entsteht. Dieses Restfehlersignal wird analog zur INTRA-Kodierung einer Transformation, einer Quantisierung und einer abschließenden Entropiekodierung, wie beispielsweise einer arithmetischen Kodierung, unterzogen. Somit werden kodierte Bilddaten durch komprimierte Koeffizienten und gegebenenfalls durch verwendete Prädiktionsvektoren und/oder Prädiktionsmodi bei Anwendung der INTER-Kodierung beschrieben.

In Figur 2 sind die kodierten Bilddaten als erste kodierte Bilddaten B11, B12 des jeweiligen kodierten Eingangsvideostroms V11, V12 als auch als zweite kodierte Bilddaten B2 eines kodierten Ausgangsvideostroms V2 symbolisch dargestellt.

Zur Erzeugung eines Videostroms gemäß einem Videokodierverfahren bzw. -standard müssen neben den kodierten Bilddaten noch Signalisierungsdaten angegeben werden, die einem Decoder administrative Informationen mitteilen, wie bspw. eine Bildgröße oder eine Bildnummer des kodierten Bildes. Diese benötigten Signalisierungsdaten werden in den kodierten Eingangsvideoströmen V11, V12 als erste Signalisierungsdaten S11 beziehungsweise S12 und in dem kodierten Ausgangsvideostrom V2 als zweite Signalisierungsdaten S2 bezeichnet.

Im vorliegenden Ausführungsbeispiel gemäß Figur 2 sollen die ersten kodierten Bilddaten B11, B12 der kodierten Eingangsvideoströme V11, V12 in einen einzigen kodierten Ausgangsvideostrom V2 derart gemischt werden, dass eine gleichzeitige Darstellung von beiden, durch die ersten kodierten Bilddaten repräsentierten ersten Bildern P11, P12 mit einem einzigen Decoder wiedergebbar ist. Dies entspricht dem in der Einleitung genannten Modus "Continuous Presence". In Figur 2 sind exemplarisch die kodierten Eingangsvideoströme V11, V12 kodiert mit einem Videokodierstandard ITU H.264 abgebildet. In dem Standard H.264 werden zu kodierende Bildinformationen mit Hilfe von "Slices" dargestellt. Ein Slice besteht dabei aus einem Slice-Header, wie beispielsweise dem jeweiligen ersten Slice-Header SH11, SH12, und den eigentlichen kodierten Bilddaten, siehe erste kodierte Bilddaten B11, B12. In Figur 2 sind die ersten bzw. zweiten Signalisierungsdaten S11, S12, S2 mit nicht ausgefüllten Rechtecken symbolisch wiedergegeben. Die Signalisierungsdaten umfassen im Allgemeinen ein oder mehrere Signalisierungsparameter. In dem vorliegenden Ausführungsbeispiel gemäß Figur 2 umfassen die ersten Signalisierungsdaten S11, S12 unter anderem erste Sequenzparametersets SPS11, SPS12 (SPS - Sequence Parameter Sets), erste Bildparametersets PPS11, PPS12 (PPS - Picture Parameter Sets) und die ersten Slice-Headers SH11, SH12.

Der zu erstellende kodierte Ausgangsvideostrom V2 weist neben zweiten kodierten Bilddaten B2 für das zweite Bild P2 auch zweite Signalisierungsdaten S2 auf. Diese zweiten Signalisierungsdaten S2 umfassen unter Anderem zweite Slice-Header SH21, SH22, ein zweites Sequenzparameterset SPS2 und ein zweites Bildparameterset PPS2.

Zum Erstellen des kodierten Ausgangsvideostroms V2 werden folgende zwei Schritte durchgeführt:

### Erster Schritt:

Die zweiten kodierten Bilddaten B2 werden derart erzeugt, dass in dem kodierten Ausgangsvideostrom zwei Slices TB1, TB2 bereitgestellt werden, wobei in den einen Slice TB1 die ersten kodierten Bilddaten B11 des einen kodierten Eingangsvideostroms V11 und in den anderen Slice TB2 die ersten kodierten Bilddaten B12 des anderen kodierten Eingangsvideostroms V12 kopiert werden. In diesem Ausführungsbeispiel entsprechen die Slices des kodierten Ausgangsvideostroms den kodierten Teilbilddaten TB1, TB2. Durch Verwendung dieser Slices TB1, TB2 ist eben die Eigenschaft separierbar kodierter Teilbilddaten erreichbar, da die jeweiligen Slices getrennt voneinander kodierbar sind und bei einem Dekodieren gleichzeitig dargestellt werden.

### Zweiter Schritt:

Hierbei werden die zweiten Signalisierungsdaten S2 zumindest teilweise auf Basis der ersten Signalisierungsdaten S11, S12 generiert. Zur Erstellung der zweiten Signalisierungsdaten, wie das zweite Sequenzparameterset SPS2, das zweite Bildparameterset PPS2 und die zweiten Slice-Header SH21, SH22, wird im Nachfolgenden näher eingegangen.

### Generierung der zweiten Slice-Header SH21, SH22:

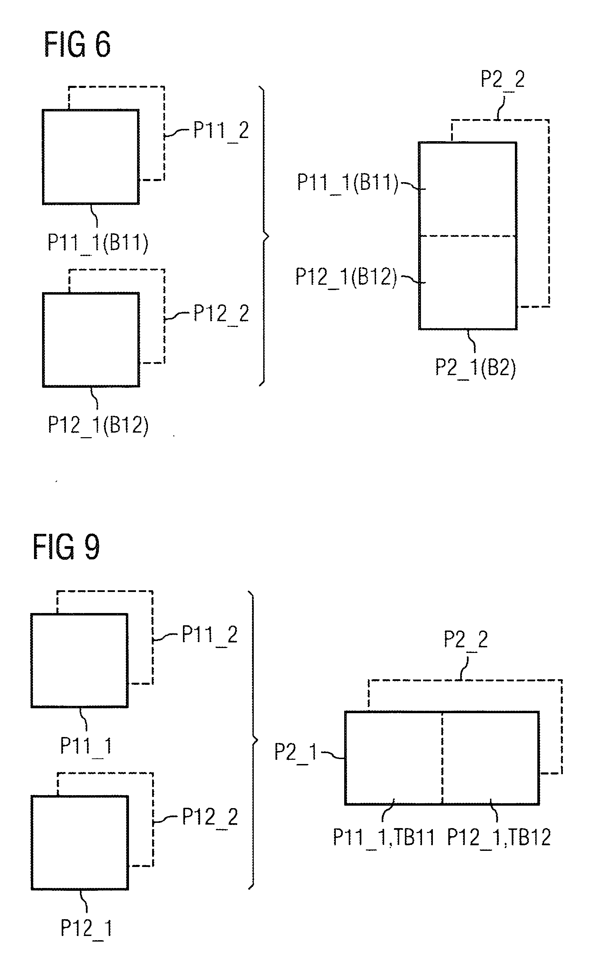

- Falls eine Einschränkung besteht, dass alle in einem Bild verwendeten Slices TB1, TB2 denselben Slice-Typ aufweisen, so muss ein entsprechendes Feld innerhalb der zweiten Slice-Header identisch sein. Die Slices innerhalb eines Bildes müssen nicht denselben Slice-Typ aufweisen. Die Slice Typen 5 bis 9 in H.264 signalisieren, dass der gleiche Slice-Typ im gesamten Bild auftritt. Falls zwei erste Bilddaten gemischt werden sollen, kann diese Signalisierung plötzlich nicht mehr stimmen. Dann müssen die Slice-Typen 0 bis 4 verwendet werden. Das Mapping ergibt sich durch Subtraktion von 5 oder durch eine Modulo-5-Operation aus den entsprechenden Signalisierungsparametern der ersten Slice Header.
- Bildnummern, in H.264 als "pic_order_cnt_lsb" Signalisierungsparameter bekannt, für die beiden Slices TB1 und TB2, die innerhalb des zweiten Bildes dargestellt werden, müssen identisch sein. Dies wird dadurch erreicht, dass in den zweiten Slice-Headern jeweils eine identische Bildnummer gewählt wird. Eine spezifische Vorgehensweise hierzu wird an späterer Stelle näher erläutert.
- Ein Signalisierungsparameter "frame_num" muss aufgrund der korrespondierenden Einträge in den jeweiligen Slice-Headern SH11, SH12 angepasst werden. Eine spezifische Vorgehensweise hierzu wird an späterer Stelle näher erläutert.
- Ein Signalisierungsparameter, der eine Adresse eines ersten Makroblocks in dem in einer unteren Bildhälfte des zweiten Bildes dargestellten Slice TB2 muss derart angepasst werden, dass sich die Adresse dieses ersten Makroblocks an eine Adresse eines letzten Makroblocks des im zweiten Bild oben angeordneten Slices TB1 anschließt.
   Für ein Beispiel hierzu wird auf Figur 6 verwiesen. Umfasst der Slice TB1 beispielsweise 99 Makroblöcke, das bedeutet von Makroblocknummer 0, ..., 98, so ist die Adresse des ersten Makroblocks des zweiten Slices TB2 99. Dies ist in Figur 6 im zweiten Bild P2 mit Zahlen dargestellt.
   Der entsprechende Signalisierungsparameter (Makroblockadressfeld) wird daher in dem zu dem Slice TB2 dazugehörigen zweiten Slice-Header SH22 entsprechend auf 99 gesetzt.
- Weitere Signalisierungsparameter des zweiten Slice-Headers SH21 können aus dem ersten Slice-Header SH11 und für den zweiten Slice-Header SH22 aus dem ersten Slice-Header SH12 kopiert werden.

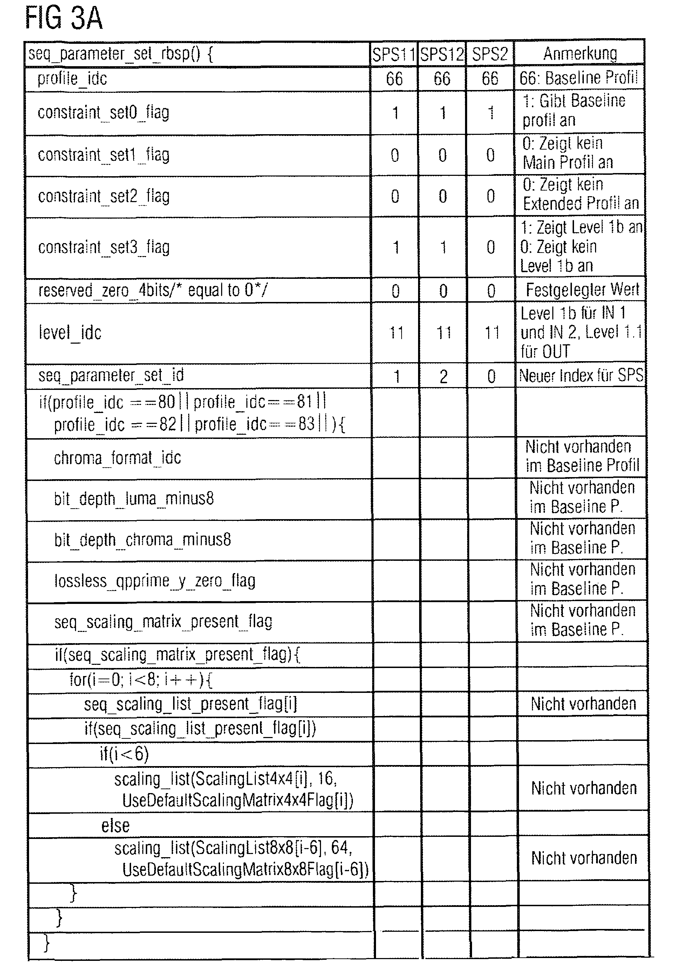

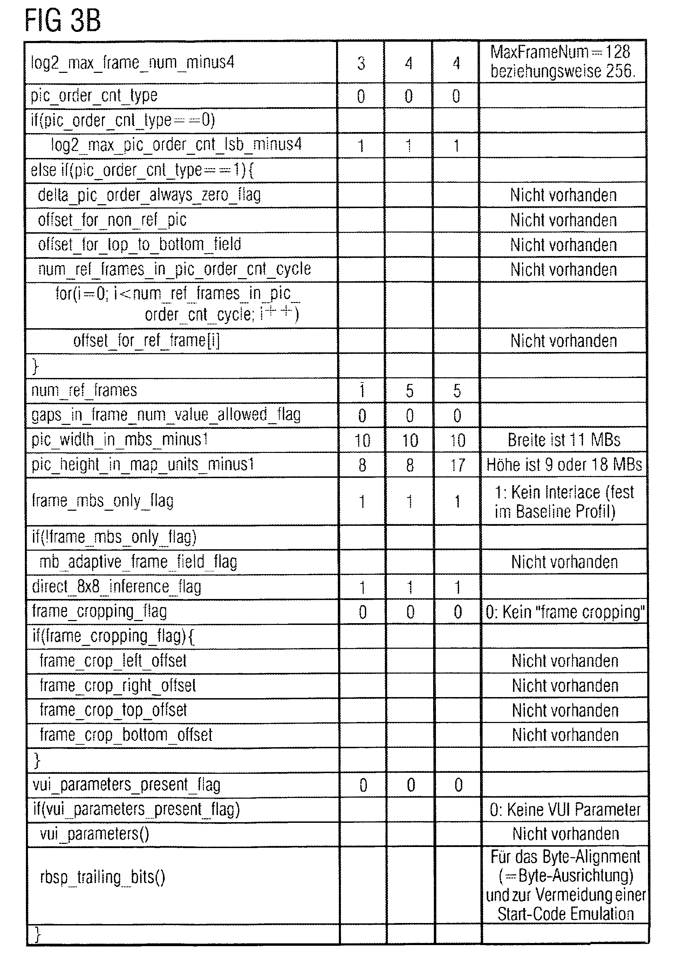

Erzeugen des zweiten Sequenzparametersets SPS2, siehe Figuren 3A und 3B:
- Eine Angabe des Signalisierungsparameters "profile_idc" des zweiten Sequenzparametersets SPS2 muss derart gewählt werden, dass damit alle in den kodierten Eingangsvideoströmen unterstützten Tools des H.264-Standards unterstützt werden. Sind die jeweiligen Signalisierungsparameter "profile_idc" in den ersten Bildparametersets PPS11, PPS12 identisch, so kann dieser Eintrag direkt in das entsprechende Feld des zweiten Bildparametersets PPS2 übernommen werden. In der Figur 3A ist profile _idc = 66.
- Ein Signalisierungsparameter "level_idc" des zweiten Bildparametersets PPS2 muss derart ausgewählt werden, dass sich die, aufgrund einer neuen Bildgröße, gegeben durch die zweiten kodierten Bilddaten, das heißt durch die beiden Slices TB1, TB2, ergebenden Parameter, wie beispielsweise eine maximale Anzahl an Makroblöcken pro Bild, im vorliegenden Beispiel beispielsweise 2x99=198 Makroblöcke, innerhalb des neu festzulegenden Signalisierungsparameters "level_idc" liegen. In der Figur 3A ist level_idc = 11.
- Signalisierungsparameter für Farbformat "chroma_format_idc" und Bitauflösung der Bildpunkte "bit_depth_luma_minus8" und "bit_depth_chroma_minus8" der zweiten Signalisierungsdaten können aus den dazu korrespondierenden Signalisierungsparametern eines der ersten Sequenzparametersets SPS11 direkt übernommen werden, da das Farbformat und die Bitauflösung in den kodierten Eingangsvideoströmen und in dem kodierten Ausgangsvideostrom identisch sein müssen.
- Eine Berechnungsvorschrift eines Signalisierungsparameters "pic_order_cnt_type" kann entweder direkt aus dem korrespondierenden Signalisierungsparameter einer der ersten Sequenzparametersets SPS11, SPS12 übernommen werden, falls dieser Signalisierungsparameter in allen ersten Sequenzparametersets SPS11 und SPS12 gleich ist. Anderenfalls ist ein Wert dieses Signalisierungsparameters aus einem der ersten Sequenzparametersets SPS11, SPS12 zu übernehmen, wobei eine Anpassung der Bildnummern innerhalb der jeweiligen zweiten Slice-Header SH21, SH22 an den übernommenen Wert erfolgen muss.
- Ferner ist eine Anzahl an Referenzbildern im kodierten Ausgangsvideostrom, repräsentiert durch einen Signalisierungsparameter "num_ref_frames", der zweiten Signalisierungsdaten derart zu wählen, dass er zumindest so groß gewählt wird, wie ein größter Wert eines korrespondierenden Signalisierungsparameters der ersten Signalisierungsdaten. Gemäß dem Beispiel in Figur 3B ergibt sich dieser Signalisierungsparameter für die zweiten Signalisierungsdaten zu:
   num_ref_frames(SPS11)=1;
   num_ref_frames(SPS12)=5
   → num_ref_frames(SPS2)=5
   Hierbei sind als erste Signalisierungsparameter SP11_1 = num_ref_frames(SPS11) und SP12_1 = num_ref_frames(SPS12) und als zweiter Signalisierungsparameter S2_1 = num_ref_frames(SPS2) zu verstehen.
- Ein Signalisierungsparameter für die Bildhöhe "pic_width_in_mbs_minus1" und/oder ein weiterer Signalisierungsparameter "pic_height_in_map_units_minus1" für eine Bildbreite einer Bildgröße umfassend die beiden Slices TB1, TB2 muss entsprechend einer Anordnung der Slices angepasst werden. Im vorliegenden Beispiel umfasst das erste Slice TB1 ein Bildformat QCIF (QCIF - Quarter Common Intermediate Format) mit 11x9 Makroblöcken, und das zweite Slice TB2 ebenfalls 11x9 Makroblöcke. Da beide Slices in dem zweiten Bild untereinander dargestellt werden, ist die Bildgröße 11x(9+9)=11x18 Makroblöcke. Somit beträgt der Signalisierungsparameter "pic_width_in_mbs_-1" = 11-1=10 und der weitere Signalisierungsparameter "pic_height_in_map_units_-1" = 18-1=17.
- Da eine verwendete Bildabtastung, das heißt progressive oder interlaced, in den kodierten Eingangsvideoströmen und in dem kodierten Ausgangsvideostrom identisch sein muss, kann ein die Bildabtastung beschreibender Signalisierungsparameter "frame_mbs_only_flag" aus einem der ersten Sequenzparametersets SPS12 entnommen und in das zweite Sequenzparameterset SPS2 kopiert werden.

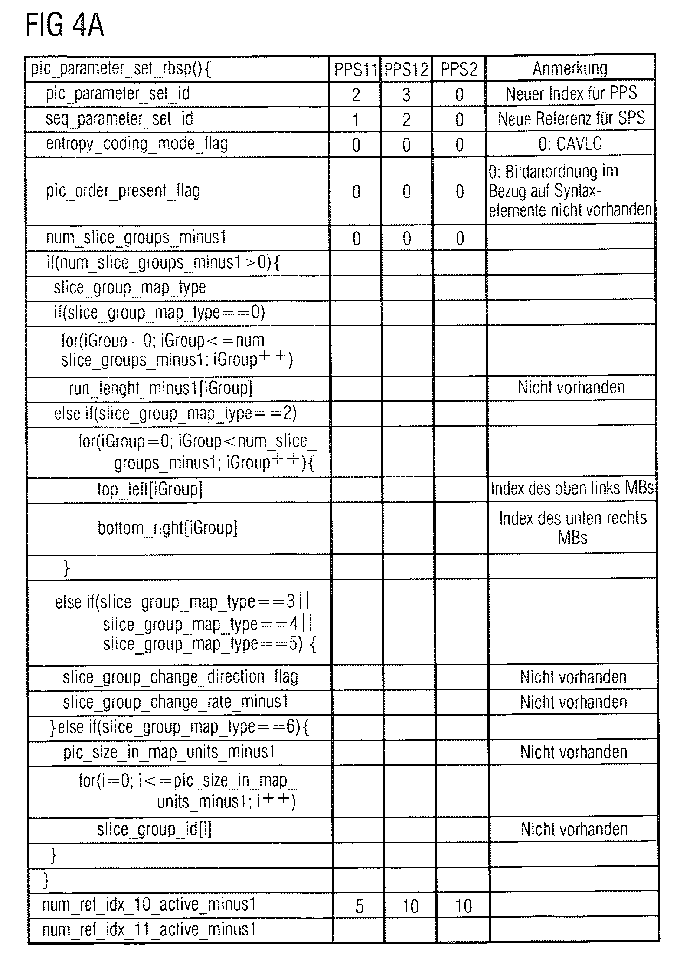

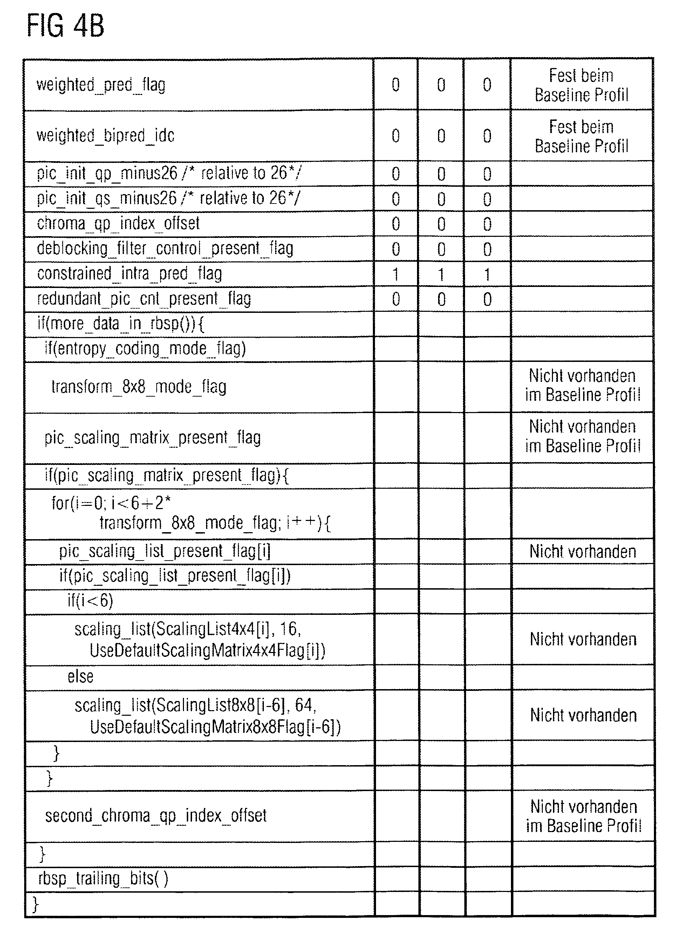

Bei Erstellung des zweiten Bildparametersets PPS2 sind folgende Punkte zu berücksichtigen, siehe als Ausführungsbeispiel die Figuren 4A und 4B:
- In dem zweiten Bildparameterset PPS2 werden neue Indizes für die Signalisierungsparameter "pic_parameter_set_id" und "seq_parameter_set_id" vergeben. "seq_parameter_set_id" muss dabei an den gewählten Wert im zweiten Sequenzparameterset SPS2 angepasst werden. In Figur 4A werden die genannten Signalisierungsparameter der ersten Bildparametersets PPS11, PPS12 nicht übernommen, sondern in dem zweiten Bildparameterset PPS2 neu gesetzt. So sind pic_parameter_set_id(PPS2)=0 und seq_parameter_set_id=0.
- Ein Signalisierungsparameter für eine Methode einer angewendeten Entropiekodierung, siehe Signalisierungsparameter "entropy_coding_mode_flag", kann aus dem korrespondierenden Signalisierungsparameter einer der ersten Bildparametersets PPS11, PPS12 übernommen werden, da dieser Signalisierungsparameter in den kodierten Eingangsvideoströmen und in dem kodierten Ausgangsvideostrom identisch ist. Somit ist entropy_coding_mode_flag(PPS2) = entropy_coding_mode_flag(PPS11).

- Ein Signalisierungsparameter des zweiten Bildparametersets zur Angabe eines maximalen Index für Referenzbilder im kodierten Ausgangsvideostrom, das heißt gemäß Figur 4A "num_ref_idx_10_active_minus1" und/oder "num_ref_idx_11_active_minus1", muss mindestens so groß gewählt werden, wie der größte Wert eines zu dem genannten Signalisierungsparameter korrespondierenden Signalisierungsparameters der verwendeten kodierten Eingangsvideoströme. Gemäß dem Beispiel aus Figur 4A beträgt dieser Signalisierungsparameter in dem ersten Bildparameterset PPS11=5 und in PPS12=10. Somit wird als Wert für diesen Signalisierungsparameter in das zweite Bildparameterset num_ref_idx_10_active_minus1(PPS2) = 10 eingetragen.
- Bei Verwendung von gewichteter Prädiktion können dazugehörige Signalisierungsparameter "weighted_pred_flag" und "weighted_bipred_idc" in den ersten Bildparametersets jeweils identisch sein, so dass der jeweilige korrespondierende Signalisierungsparameter des zweiten Bildparametersets dem jeweiligen Signalisierungsparameter eine der ersten Bildparametersets gleichgesetzt wird, bspw. weighted_pred_flag(PPS) = weighted_pred_flag(PPS11) und weighted_bipred_idc(PPS2) = weighted_bipred_idc(PPS12). Falls die Signalisierungsparameter jedoch in den ersten Bildparametersets jeweils unterschiedlich sind, so wird in den genannten Signalisierungsparametern des zweiten Bildparametersets die gewichtete Prädiktion signalisiert. In den jeweiligen zweiten Slice Headern SH21, SH22 wird dann das jeweils für die Prädiktion in den dazugehörigen Slices TB1, TB2 verwendete Gewicht signalisiert, auch wenn dieses einem Defaultwert, bspw. 1 für uni-direktionale und 0,5 für bidirektionale Prädiktion, entspricht. Diese Gewichte werden in sogenannte Prädiktionsgewichtstabellen ("prediction weight table") in dem jeweiligen zweiten Slice Header geschrieben.
- Falls ein jeweiliger Signalisierungsparameter für einen Offset für den Quantisierungsparameter, das heißt "pic_init_qp_minus26" bzw. "pic_init_qs_minus26", in den jeweiligen ersten Bildparametersets PPS11, PPS12 identisch ist, so kann der jeweilige Signalisierungsparameter eines der ersten Bildparametersets direkt in den korrespondierenden Signalisierungsparameter des zweiten Bildparametersets übernommen werden. Sind jedoch diese Signalisierungsparameter der ersten Bildparametersets unterschiedlich, so wird zunächst der jeweilige Signalisierungsparameter einer der ersten Bildparametersets PPS11 in die korrespondierenden Signalisierungsparameter der zweiten Bildparametersets eingetragen. Dann wird ein jeweiliger Unterschiedswert zwischen dem eingetragenen Signalisierungsparameter und dem korrespondierenden Signalisierungsparameter SPX des ersten Bildparametersets ermittelt. Dieser jeweilige Unterschiedswert wird schließlich zu einem Quantisierungsparameter "slice_QP_delta" desjenigen zweiten Slice-Headers addiert, der zu demjenigen Slice gehört, welches sich auf den kodierten Eingangsvideostrom des ersten Bildparametersets des betrachteten korrespondierenden Signalisierungsparameters SPX bezieht.
- Falls ein Signalisierungsparameter für die Verwendung einer expliziten Steuerung eines Deblockingfilters, siehe "deblocking_filter_control_present_flag" in Figur 4B, identisch in den ersten Bildparametersets ist, so kann für den korrespondierenden Signalisierungsparameter in dem zweiten Bildparameterset ein korrespondierender Wert aus einem der ersten Bildparametersets übernommen werden. Falls sich jedoch dieser Signalisierungsparameter in den ersten Bildparametersets unterscheidet, so muss dieser Signalisierungsparameter in dem zweiten Bildparameterset auf explizite Steuerung des Deblockingfilters gesetzt werden.

In den Figuren 3A und 3B sind für die ersten Sequenzparametersets und den zweiten Sequenzparameterset beispielhafte Signalisierungsparameter angegeben, wobei in den Figuren 3A und 3B ersichtlich ist, in welcher Art und Weise eine Überführung der jeweiligen Signalisierungsparameter der ersten Sequenzparametersets in das zweite Sequenzparameterset möglich ist. In den Figuren 4A und 4B sind für die Signalisierungsparameter der ersten Bildparametersets angegeben, wie diese in die entsprechenden Signalisierungsparameter des zweiten Bildparametersets überführt werden können.

Der Videokodierstandard H.264 verwendet in den jeweiligen Slice-Headern als Signalisierungsparameter die Zähler "pic_order_cnt_lsb" und "frame_num". Der Zähler "pic_order_cnt_lsb" dient einer Bestimmung einer Ausgabereihenfolge von dekodierten Bildern beziehungsweise Slices, da eine Dekodierreihenfolge einzelner Bilder bzw. Slices unterschiedlich zu der dazugehörigen Ausgabereihenfolge, das heißt Wiedergabe auf einem Bildschirm, sein kann. Der andere Zähler "frame_num" wird dazu verwendet, Referenzbilder zu indizieren und dient unter Anderem einer Erkennung von beispielsweise aufgrund einer fehlerhaften Übertragung fehlender Referenzbilder. Ist ein Bild bzw. ein Slice kein Referenzbild, so wird auch der andere Zähler "frame_num" nicht erhöht.

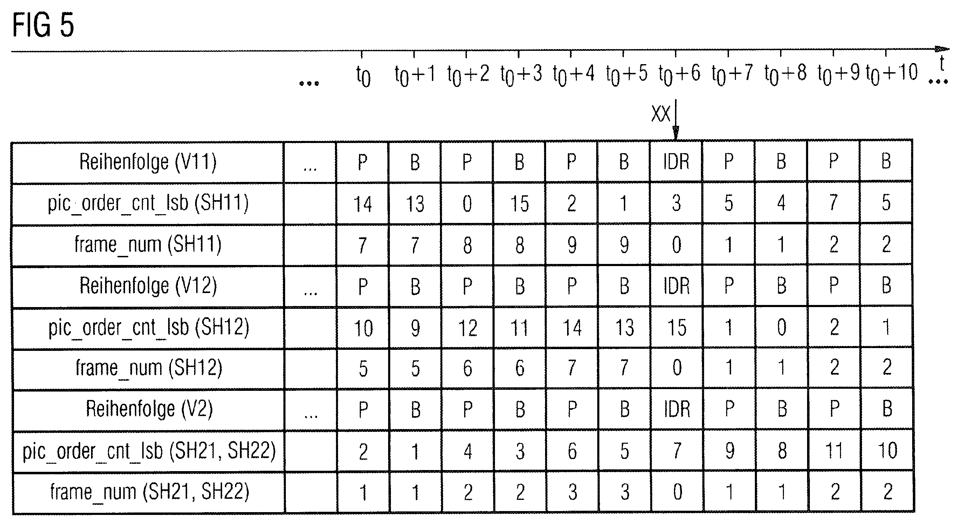

Figur 5 zeigt ein Beispiel zur Anpassung der Bildnummern in Form beider Zähler "pic_order_cnt_lsb" und "frame_num" in dem jeweiligen zweiten Slice-Headern SH21, SH22. Dabei sind jeweilige Bilder/Slices der kodierten Eingangsvideoströme und des kodierten Ausgangsvideostroms über der Zeit t aufgetragen, wobei lediglich ein Ausschnitt betrachtet wird, der bei t0+0 startet und bei t0+10 endet. In der ersten Zeile ist eine zeitliche Reihenfolge von aufeinanderfolgenden kodierten Bildern des kodierten Eingangsvideostroms V11 zu sehen. Dabei sind die kodierten Bildinformationen als INTRA-Kodierung IDR, als INTER-Kodierung P oder als bidirektionale Kodierung B markiert. In der zweiten und dritten Zeile sind die Steuerungsparameter "pic_order_cnt" und "frame_num" aus dem ersten Slice-Header SH11 des kodierten Eingangsvideostroms V11 gemäß einer Vorschrift des verwendeten Videokodierstandards H.264 abgedruckt. Analog dazu finden sich in den Zeilen 4 bis 6 die entsprechenden Angaben für kodierte Bildinformationen beziehungsweise Bilder/Slices des kodierten Eingangsvideostroms V12. Die in einer ersten und vierten Zeile angegebenen kodierten Bilder/Slices sollen gemäß ihrer Anordnung in der jeweiligen Spalte zu dem kodierten Ausgangsvideostrom zusammengefasst werden. So sollen beispielsweise das IDR-Bild von dem kodierten Eingangsvideostrom V11 und das IDR-Bild des kodierten Eingangsvideostroms V12 der Spalte XX in ein IDR-Bild des kodierten Ausgangsvideostroms überführt werden. Wie in dieser Spalte XX zu sehen ist, unterscheiden sich die zu dem jeweiligen kodierten Eingangsvideostrom dazugehörigen Signalisierungsparameter. Diese werden gemäß einem beispielhaften Vorschlag der Zeilen 7 bis 9 folgendermaßen neu erstellt:
- Eine Reihenfolge, siehe Figur 5 Zeilen 1, 4, 7, der ersten und zweiten kodierten Bilddaten bzw. Bilder bzw. Slices des kodierten Ausgangsvideostroms V2 entspricht dem jeweiligen verwendeten Kodiermodus der kodierten Eingangsvideoströme V11 und V12. Da die Reihenfolge der kodierten Bilder/Slices der beiden kodierten Eingangsvideoströme identisch ist, unterscheidet sich der Signalisierungsparameter "frame_num" lediglich in einem Offset, wobei bei einem Erreichen eines kodierten Bildes mit einem Kodiermodus IDR dieser Signalisierungsparameter "frame_num" auf 0 initialisiert und von 0 ausgehend inkrementiert wird. Die Signalisierungsparameter "frame_num" der zweiten Slice-Header SH21, SH22 können ab Beginn eines kodierten Bilds vom Kodiermodus IDR, siehe Spalte XX, durch Kopieren des korrespondierenden Signalisierungsparameters aus einem der ersten Slice-Header SH11 bzw. SH12 erzeugt werden. Der Signalisierungsparameter vor Erreichen des kodierten Bilds mit einem Kodiermodus IDR wird durch Abzug eines Offsets von einem der Signalisierungsparameter "frame_num" eines der ersten Slice-Header des SH11 oder SH12 gewonnen, beispielsweise ist frame_num(SH21) = frame_num(SH12) - 4.
- Der Signalisierungsparameter "pic_order_cnt_lsb" der zweiten Slice-Header SH21, SH22 wird dadurch generiert, dass ein zeitlich korrespondierender Signalisierungsparameter "pic_order_cnt_lsb" eines der ersten Slice-Header, beispielsweise SH12, um einen Offset verringert wird, so dass der Signalisierungsparameter "pic_order_cnt_lsb" des zweiten Slice-Headers mit einem minimalen Wert 1 beginnt. Im vorliegenden Beispiel:
   "pic_order_cnt_lsb(SH21)"-("pic_order_cnt_lsb(SH12)-8) mod 15",
   wobei der Zähler "pic_order_cnt_lsb" durch Moduloarithmetik (mod) auf einen Wertebereich von 0 bis 15 begrenzt wird.

Figur 6 zeigt erste Bilder P11_1, P11_2, P12_1, P12_2 der kodierten Eingangsvideoströme. Diese liegen zunächst separat in den jeweiligen kodierten Eingangsvideoströmen V11, V12 in kodierter Form vor, das heißt als erste kodierte Bilddaten B11, B12. Durch Anwenden des Ausführungsbeispiels gemäß den Figuren 2 bis 4 wird erreicht, dass aus den zwei einzelnen ersten Bildern P11_1 und P12_1, d.h. einem Bildpaar, ein einziges zweites Bild P21 dergestalt erzeugt wird, dass dieses bei Dekodierung und Darstellung auf einem Ausgabemedium so wiedergegeben wird, dass in der oberen Bildhälfte ein Bildinhalt des ersten Bilds P11_1 und in der unteren Bildhälfte ein Bildinhalt des ersten Bilds P12_1 zu sehen ist.

Die Ausführungsbeispiele dieser Beschreibung beschränken sich zumeist auf die Erzeugung des kodierten Ausgangsvideostroms unter Berücksichtigung eines einzigen Bildpaares erster Bilder, zum Beispiel P11_1 und P12_1, in dem einzigen zweiten Bild P2_1. Es versteht sich von selbst, dass die Erfindung und die Ausführungsbeispiele auf eine Sequenz von ersten Bildern anwendbar sind, wobei die in den Ausführungsbeispielen genannten Verfahrensschritte bildpaarweise durchgeführt werden, so dass mehrere erste Bilder der jeweiligen kodierten Eingangsvideoströme in mehrere zweite Bilder des kodierten Ausgangsvideostroms überführt werden können. In Figur 6 ist das zweite Bild P2_1 aus den ersten Bildern P11_1, P12_1 und ein zweites Bild P2_2 aus den ersten Bildern P11_2, P12_2 erzeugt worden. Zudem versteht es sich von selbst, dass mehr als zwei kodierte Eingangsvideoströme zur Erstellung des kodierten Ausgangsvideostroms verwendet werden können.

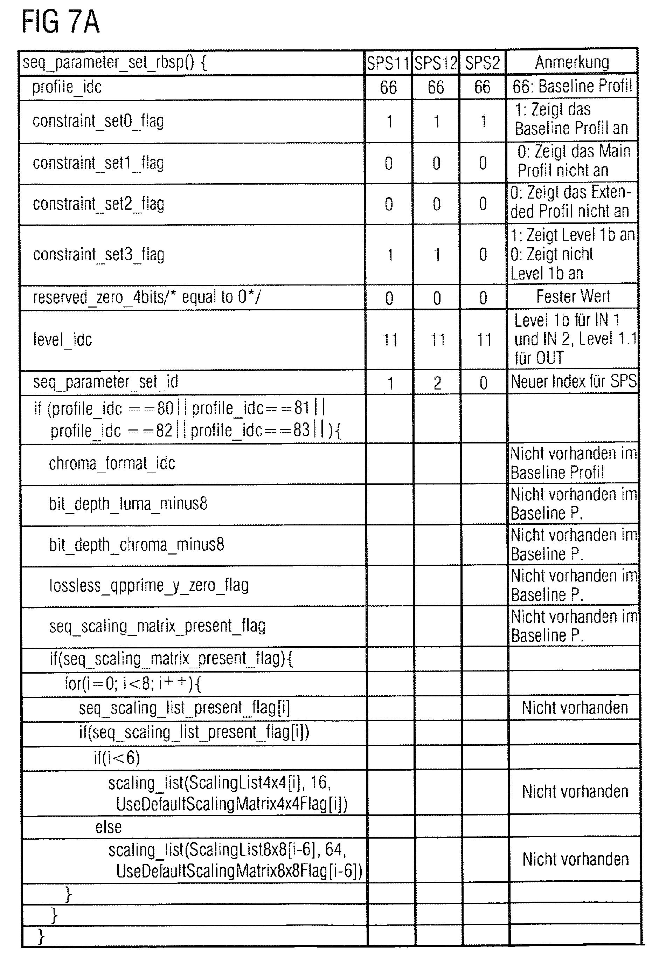

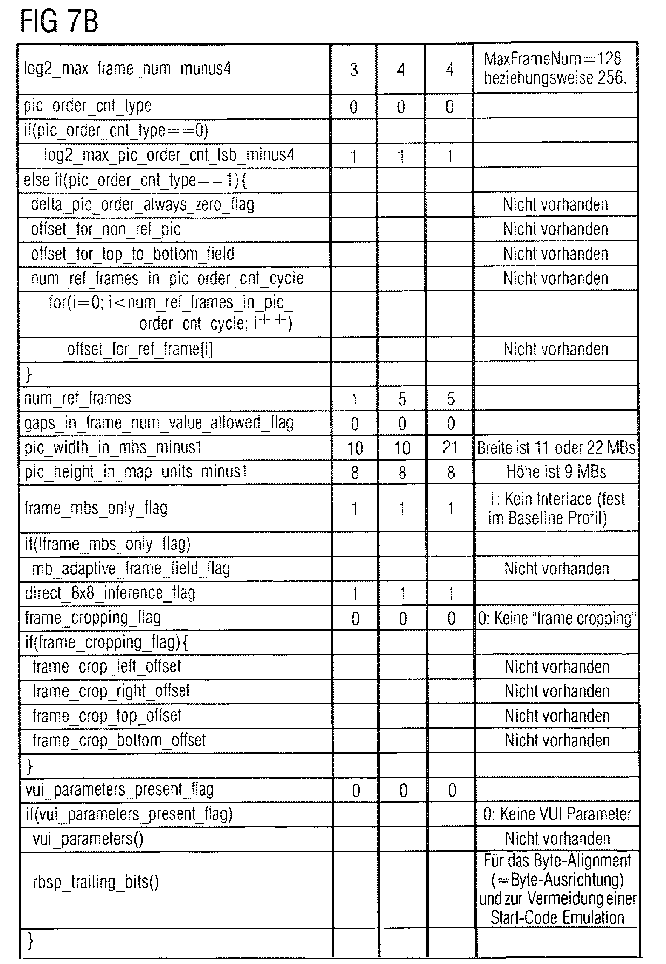

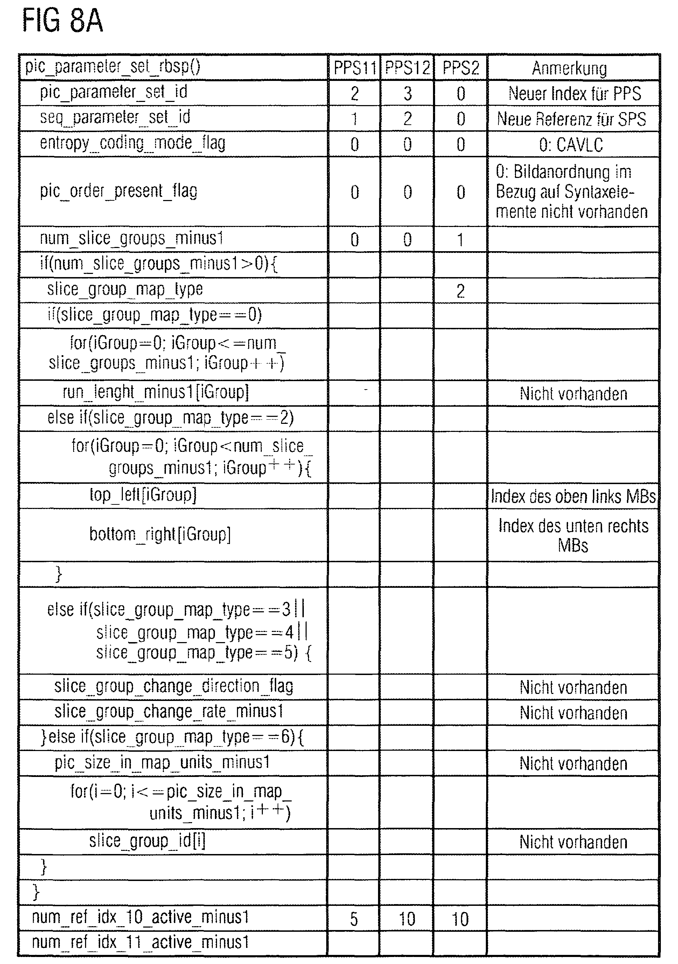

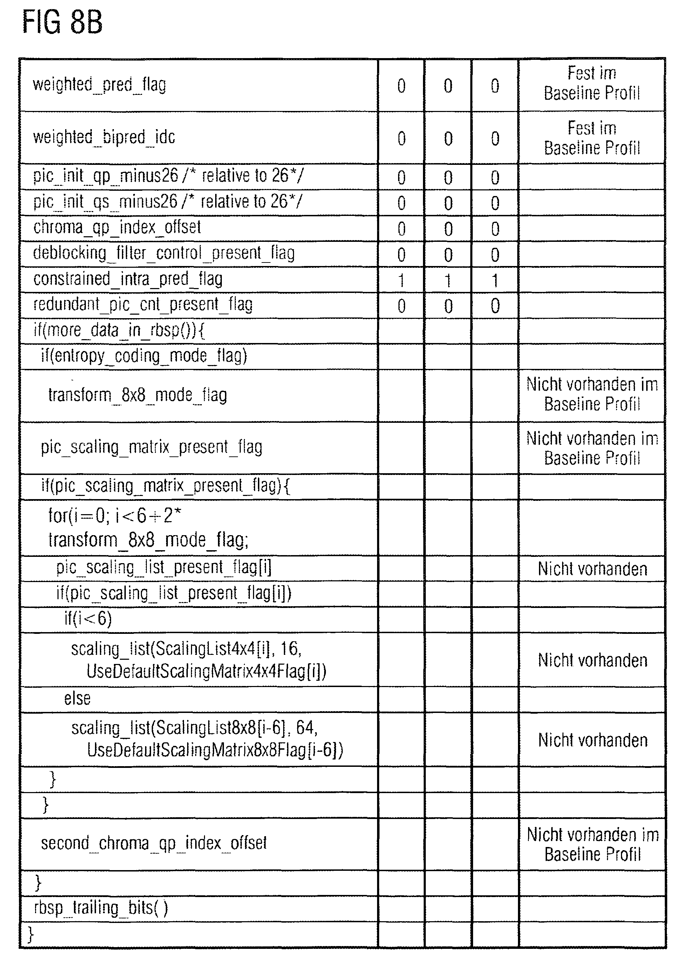

In einem weiteren Ausführungsbeispiel unter Verwendung des Videokodierstandards H.264 werden als kodierte Teilbilddaten TB1, TB2 Slice-Group-Elemente verwendet. Slice-Group-Elemente ermöglichen eine flexible Anordnung von Slices beziehungsweise, falls ein kodiertes Bild durch ein einziges Slice repräsentiert wird, auch eine flexible Zuordnung von Bildern, so dass erste Bilder der kodierten Eingangsvideoströme in dem zweiten Bild des kodierten Ausgangsvideostroms nebeneinander angeordnet werden können. Ferner wird die Adresse der Macroblocks analog zu dem Ausführungsbeispiel nach Figur 2 angepasst. Zur Generierung der zweiten Signalisierungsdaten S2 des kodierten Ausgangsvideostroms kann in analoger Weise zu den Ausführungen der obigen Ausführungsbeispiele vorgegangen werden. Beispielhafte Ausgestaltungen des zweiten Sequenzparametersets SPS2 sind den Figuren 7A, 7B und des zweiten Bildparametersets PPS2 den Figuren 8A und 8B zu entnehmen. Dabei sind folgende Unterschiede zu beachten:

In dem neu zu erstellenden zweiten Sequenzparameterset SPS2 ist zu beachten, dass aufgrund einer zu den obigen Beispielen unterschiedlichen Anordnung der ersten Bilder in dem zweiten Bild eine Bildgrößenangabe des zweiten Bilds unterschiedlich bestimmt wird. Wird beispielsweise davon ausgegangen, dass die ersten Bilder jeweils 11x9 Makroblöcke als Bildgröße aufweisen, so wird bei einem horizontalen Zusammenfügen der zwei ersten Bilder in das zweite Bild eine Bildgröße des zweiten Bilds zu 22x9 Makroblöcke ermittelt. Die jeweiligen Signalisierungsparameter des zweiten Sequenzparametersets ergeben sich zu
pic_width_in_mbs_minus1 = 22-1 =21 und pic_height_in_map_units_minus1 = 9-1 = 8.

In dem neu zu bestimmenden zweiten Bildparameterset PPS2 muss zunächst ein Signalisierungsparameter "num_slice_groups_minus1" auf 1 gesetzt werden, um zu signalisieren, dass zwei Slice-Groups in dem zu erstellenden kodierten Ausgangsvideostrom vorhanden sind. Ferner ist ein Signalisierungsparameter "slice_group_map_type" zu setzen, wie beispielsweise "slice_group_map_type"=2. Die weiteren Signalisierungsparameter des zweiten Bildparametersets PPS2 und des zweiten Sequenzparametersets SPS2 werden analog zu den Ausführungen der obigen Beispiele durchgeführt.

Figur 9 zeigt für das letzte Ausführungsbeispiel, in welcher Art und Weise die erste Bilder P11_1 und P12_1 zu einem zweiten Bild P2_1 zusammengefügt werden. Hierbei sind die ersten Bilder horizontal nebeneinander in das zweite Bild eingefügt worden. Analog zu den Ausführungen von Figur 6 können auch weitere erste Bilder P11_2, P12_2 zu einem neuen zweiten Bild P2_2 mit der im Ausführungsbeispiel genannten Vorgehensweise zusammengefügt werden.

Bei Verwendung einer im Videokodierstandard H.264 definierten Makroblockanordnungsmethode, auch als Flexible Macroblock Ordering FMO bekannt, wird eine Zuordnung der einzelnen Makroblöcke zu den Slice-Groups im kodierten Ausgangsvideostrom signalisiert. Neben einigen vordefinierten Typen ist noch eine völlige freie Zuordnung möglich. Diese Zuordnung wird mittels einer Tabelle, der so genannten "macroblock to slice group map" signalisiert. In dieser wird für alle Makroblöcke eines Bildes der jeweilige "Slice-Group"-Index vergeben.

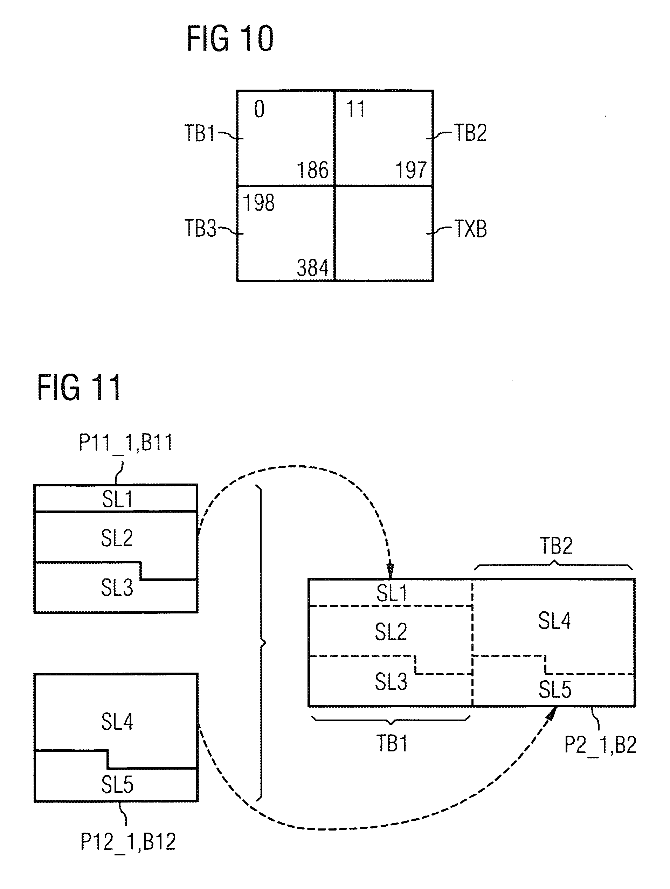

Bei den vordefinierten Typen im Videokodierstandard H.264 ist unter Anderem ein Typ=2 sehr interessant, der eine Definition von rechteckförmigen Slice-Groups erlaubt. Dabei werden die Slice-Groups durch eine Adresse des oberen linken und des unteren rechten Makroblocks der jeweiligen Slice-Groups definiert. Alle so nicht erfassten Makroblöcke werden schließlich der letzten Slice-Group, einer so genannten Hintergrund-Slice-Group (Background Slice-Group), zugeordnet. Ein Beispiel für eine derartige Konfiguration nach Typ=2 wird in Figur 10 anhand einer Bildgröße im CIF-Format (CIF - Common Intermediate Format), das heißt mit 352x288 Bildpunkten, des zweiten Bildes gezeigt. Werden jeweils 16x16 Bildpunkte zu einem Makroblock zusammengefasst, so kann das zweite Bild der Größe CIF mit einer jeweiligen Slice-Group Größe von 11x9 Makroblöcke, 2x2=4 Slice-Groups aufweisen. Die Makroblockadressen werden Zeile für Zeile, von oben nach unten, beginnend mit einem Index 0, vergeben. So ist eine erste Slice-Group TB1, d.h. in den kodierten Teilbilddaten TB1, durch die Makroblockadressen 0 oben links und 186 unten rechts, eine zweite Slice-Group TB2, d.h. die kodierten Teilbilddaten TB2, durch die Makroblockadressen oben links 11 und unten rechts 197 und eine dritte Slice-Group TB3, d.h. kodierte Teilbilddaten TB3, durch die Makroblockadressen oben links 198 und unten rechts 384 charakterisiert. Alle nicht erfassten Makroblöcke werden einer letzten Slice-Group TXB zugeordnet, also dem unteren rechten Bildquadrat. So kann für jedes enkodierte Bild, das heißt erste kodierte Bilddaten, der kodierten Eingangsvideoströme eine jeweilige Slice-Group TB1, ..., TB3 zugeordnet werden. Mit Hilfe von Slice-Groups kann im Übrigen auch eine vertikale Anordnung von ersten Bildern ermöglicht werden. Im Videokodierstandard H.264 sind bis zu acht Slice-Groups möglich.

Sind bereits in jedem der ersten kodierten Bilddaten mehrere Slices SL1, ... SL5 vorhanden, so können diese gemäß dem Videokodierstandard H.264 entsprechend der jeweiligen Anordnung im jeweiligen ersten Bild P11_1, P12_1 in eine jeweilige Slice-Group TB1, TB2 eingefügt werden. Dies ist beispielhaft in Figur 11 zu sehen. Dabei umfasst die Slice-Group TB1 des zweiten Bildes P2_1 die drei Slices SL1, SL2, SL3, und die Slice-Group TB2 die zwei Slices SL4, SL5. Die zu den jeweiligen Slices in den Slice-Groups gehörenden Makroblockadressen müssen in den jeweiligen Slice-Headern für die Slices SL4 und SL5 angepasst werden. Die Adressen der Makroblöcke der in der ersten Slice-Group TB1, die jeweils in den zu den Slices SL1, ..., SL3 dazugehörigen Slice-Headern hinterlegt sind, abgelegten Slices SL1, ..., SL3 können hingegen aus den ersten Signalisierungsdaten des kodierten Eingangsvideostroms V11 direkt kopiert werden.

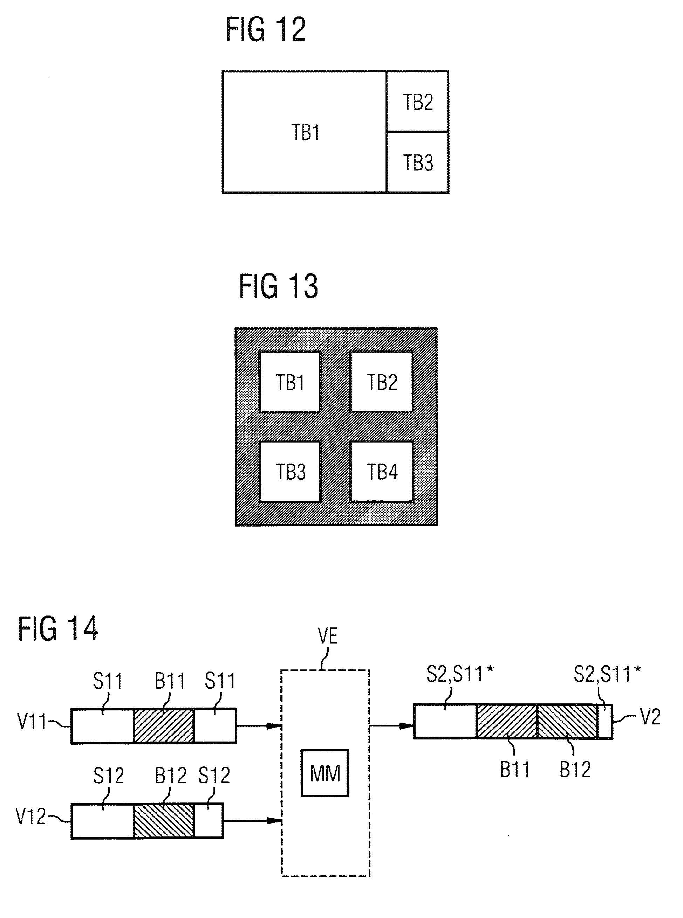

In Figur 10 werden erste kodierte Bilddaten von drei kodierten Eingangsvideoströmen in eine jeweilige Slice-Group TB1, TB2, TB3 eingefügt, wobei die durch die ersten kodierten Bilddaten repräsentierten ersten Bilder jeweils eine Bildgröße von QCIF aufweisen. Das Videokodierverfahren H.264 erlaubt es jedoch auch, dass die kodierten Teilbilddaten, das heißt die Slice-Groups TB1, TB2, TB3, unterschiedliche Bildgrößen aufweisen. In Figur 12 ist dazu eine beispielhafte Anordnung zu sehen, bei der die kodierten Teilbilddaten TB1 ein erstes Bild mit einer Bildgröße CIF und die kodierten Teilbilddaten TB2, TB3 jeweils ein kodiertes erstes Bild mit einer Größe QCIF repräsentieren.

Die Verwendung von Slices und Slice-Groups als kodierte Teilbilddaten kann auch in Kombination angewendet werden. Beispielsweise sollen neun erste Bilder bzw. kodierten Bilddaten neun verschiedener kodierter Eingangsvideoströme in die zweiten kodierten Bilddaten des kodierten Ausgangsvideostroms überführt werden. Dazu werden die neuen ersten kodierten Bilddaten jeweils in einen Slice der zweiten kodierten Bilddaten kopiert. Jeweils drei der Slices der zweiten kodierten Bilddaten werden zu einer slice group zusammengefasst. Werden die jeweiligen Slices einer slice group untereinander und die drei slice groups nebeneinander angeordnet, so ergibt sich ein zweites Bild aus 3x3 ersten Bildern. Bei dieser Vorgehensweise können somit eine große Anzahl von kodierten Eingangsvideoströmen in den kodierten Ausgangsvideostrom überführt werden.

In einer Erweiterung zu den Ausführungen gemäß Figur 10 ist es möglich, dass die einzelnen Slice-Groups TB1, TB2 und TB3 in dem zweiten Bild nicht direkt aneinander stoßen und/oder ihre Ränder nicht zwangsläufig mit einem Rand des zweiten Bilds übereinstimmen müssen. Dabei werden die ersten Bilder bzw. die ersten kodierten Bilddaten in den Slice-Groups TB1 bis TB4 als so genannte "foreground slice group" kodiert und die so nicht indizierten Makroblöcke als "background slice group" behandelt. Eine Breite der Balken zwischen den foreground slice groups ist dabei ein Vielfaches einer Breite eines Makroblocks, das heißt ein Vielfaches von 16 Bildpunkten. Figur 13 zeigt ein mögliches Ergebnis auf einem Ausgabemedium nach Dekodierung des dazugehörigen kodierten Ausgangsvideostroms, wobei die nicht indizierten Makroblöcke schwarz dargestellt worden sind.

Neben einer Verwendung der Erfindung mittels des Videokodierverfahrens H.264 kann die Erfindung auch auf andere Videokodierstandards angewendet werden, die eine Unterteilung des Gesamtbild erlauben, das heißt die zweiten kodierten Bilddaten in jeweils separierbare kodierte Teilbilddaten zulassen. So gibt es beispielsweise im Videokodierverfahren H.263 einen optionalen Kodiermodus für eine Verwendung von Slices (Rectangular Slice Submode des Annex K). Die Flexibilität ist hierbei allerdings im Vergleich zu H.264 deutlich eingeschränkt. Das zweite Bild kann lediglich in Rechtecke mit variabler Breite unterteilt werden, wobei jedes Rechteck als Slice bezeichnet wird. Die Höhe jedes dieser Slices entspricht jedoch der Höhe des zweiten Bildes. Das bedeutet, dass in dem Standard H.263 Annex K die Slices, die den ersten Bildern entsprechen, lediglich in dem zweiten Bild nebeneinander angeordnet werden können. Es wird hierbei analog zu der in den vorangehenden Ausführungsbeispielen erläuterten Anpassung der zweiten Signalisierungsdaten aus zumindest einigen der ersten Signalisierungsdaten, wie beispielsweise im Picture Header, vorgegangen. Weiterhin werden die GOB-Header (GOB - Group of Block) durch die Slice-Header ersetzt, wobei hier die meisten Signalisierungsparameter direkt übernommen werden können. Anschließend werden die ersten dekodierten Bilddaten, wie Koeffizienten und Bewegungsvektoren, auf Makroblockebene direkt als zweite kodierte Bilddaten übernommen. Auch für diesen Standard H.263 Annex K ist eine Transkodierung der kodierten Bildinformationen nicht nötig.

Weiterhin kann die Erfindung auch auf einen Videokodierstandard SVC (SVC - Scalable Video Coding) angewendet werden. Dazu muss jedoch die Layer-Struktur, das heißt Aufbau der örtlichen und SNR-Layer (SNR - Signal-to-Noise-Ratio) in den kodierten Eingangsvideoströmen, identisch sein. Dann können analog wie bei H.264 aus kodierten Eingangsströmen das zweite Sequenzparameterset SPS2 aus den jeweiligen ersten Sequenzparametersets SPS11, SPS12 und das zweite Bildparameterset PPS2 aus ersten Bildparametersets PPS11, PPS12 der einzelnen Layer gewonnen werden. Zudem werden analog zu den obigen Ausführungen für H.264 die Slice-Header geringfügig angepasst. Die restlichen Slice-Daten, das heißt die ersten kodierten Bilddaten, umfassend beispielsweise Koeffizienten und Bewegungsinformationen, werden dann unverändert in die zweiten kodierten Bilddaten direkt übernommen.

Eine interessante Anwendung der Erfindung ergibt sich bei Verwendung von SVC-kodierten Eingangsvideoströmen. Aus diesen können die H.264 kompatiblen Basislayer extrahiert werden, wodurch H.264 kompatible kodierte Eingangsvideoströme gewonnen werden. Diese werden anschließend analog zu den obigen Ausführungsbeispielen in den kodierten Ausgangsvideostrom überführt. Somit können in einem Videokonferenzsystem mit verschiedenen Endgeräten die SVC-Endgeräte mit einem oder mehreren Decodern die SVC-kompatiblen kodierten Eingangsvideoströme erhalten und verarbeiten, wohingegen herkömmliche H.264-Endgeräte mit nur einem einzigen Decoder den H.264-kompatiblen kodierten Ausgangsvideostrom, gebildet aus den H.264-kompatiblen Basislayern, erhalten und dekodieren.

Eine weitere vorteilhafte Ausführungsform der Erfindung bezieht sich auf eine Steuerung einer Datenrate des kodierten Ausgangsvideostroms. Beispielsweise ist eine jeweilige Bandbreite eines Übertragungskanals zu einem oder mehreren Endgeräten begrenzt. Da sich eine Gesamtdatenrate des kodierten Ausgangsvideostroms in Prinzip aus einer Summe der Datenrate der einzelnen kodierten Eingangsvideoströme ergibt, ist es beispielsweise vorteilhaft, eine Datenrate der einzeln kodierten Eingangsvideoströme direkt an den einzelnen Enkodern der Endgeräte zu regeln. Hierdurch wird ein aufwändiges Transrating, das heißt Verringern der Datenrate unter Beibehaltung des Videokodierstandards und der zeitlichen und örtlichen Auflösung, beim Erzeugen des kodierten Ausgangsvideostroms aus den kodierten Eingangsvideoströmen vermieden. Bei einer Videokonferenz kann so eine zentrale Einheit, d.h. eine Videokonferenzkontrolleinheit MCU, verfügbare Bandbreiten der einzelnen Übertragungskanäle für die jeweiligen Endgeräte bestimmen und daraus die Datenraten der einzelnen Enkoder ableiten. Dies kann sowohl statisch beim Verbindungsaufbau geschehen, als auch dynamisch während der Videokonferenz, falls sich hierbei Bandbreiten eines oder mehrerer Übertragungskanäle über die Zeit ändern oder neue Endgeräte zur Videokonferenz hinzukommen. Eine Summe der Datenrate der einzelnen kodierten Eingangsvideoströme darf dabei für keine der Endgeräte größer als die jeweilige verfügbare Bandbreite sein.

Bei dem Gruppieren der ersten kodierten Bilddaten B11, B12 in die zweiten kodierten Bilddaten B2 sind zunächst keine Restriktionen gegeben. Es kann jedoch vorkommen, dass bei der INTER-Kodierung, d.h. bei Anwendungen einer Prädiktion, teilweise außerhalb eines Bildbereichs des durch die ersten kodierten Bilddaten beschriebenen ersten Bilds prädiziert wird. Für diese Bildpunkte außerhalb des Bildbereichs gibt das jeweilige Videokodierverfahren, wie beispielsweise H.263 oder H.264, eine spezifische Rechenvorschrift vor. Liegt jedoch nach dem Kopieren der ersten kodierten Bilddaten in die zweiten kodierten Bilddaten eine Referenz für die Prädiktion, die bei den ersten kodierten Bilddaten außerhalb der ersten Bilder lag, nicht mehr außerhalb des durch die zweiten kodierten Bilddaten beschriebenen zweiten Bildes, so wird unter Umständen eine fehlerhafte Prädiktion und somit ein fehlerhafte Dekodierung durchgeführt. Aus diesem Grund ist es vorteilhaft, aber nicht zwingend, Prädiktionen, insbesondere zeitliche Prädiktionen, bei einer Erstellung der kodierten Eingangsvideoströme derart vorzunehmen, dass diese ausschließlich Prädiktionen verwenden, bei denen Referenzen lediglich innerhalb des jeweiligen Bildbereichs eines jeweiligen ersten Bildes verweisen. Anderenfalls kann es vorkommen, dass es im Bereich zwischen den kodierten Teilbilddaten bei einer Dekodierung zu Bildstörungen kommt. Diese Störungen verschwinden jedoch nach INTRA-kodierten Bildern IDR, die bei vielen Anwendungsfällen von Videokodierverfahren in periodischen zeitlichen Abständen gesendet werden. Bei Videokonferenzanwendungen mit statischem und unbewegtem Hintergrund ist dieses Problem zu vernachlässigen, da in der Regel eine Prädiktion außerhalb des Bildbereichs nicht vorkommt. Um bei der Erstellung des kodierten Ausgangsvideostroms sicher zu gehen, dass die kodierten Eingangsvideoströme keine durch die Prädiktion begründeten Referenzen außerhalb des jeweiligen Bildbereichs aufweisen, kann diese Eigenschaft in den jeweiligen kodierten Eingangsvideoströmen signalisiert werden. Der H.264-Standard bietet beispielsweise für eine derartige Signalisierung so genannte SEI-Nachrichten (SEI - Supplemental Enhancement Information) an. Eine Syntax und Semantik einer derartigen SEI-Nachricht könnte wie folgt aussehen: 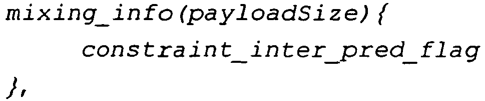 wobei der Signalisierungsparameter constraint_intra_pred_flag=1 anzeigt, dass Prädiktionen bei der INTER-Kodierung im Falle von zeitlichen Prädiktionen nur Referenzen innerhalb der Grenzen des jeweiligen Bildes erlauben.

Ein weiteres Ausführungsbeispiel wird anhand von Figur 14 näher erklärt. Analog zur Figur 2 umfassen die jeweiligen kodierten Eingangsvideoströme V11, V12 jeweils die ersten kodierten Bilddaten B11, B12 und jeweils die ersten Signalisierungsdaten S11, S12. Zur Erstellung der zweiten kodierten Bilddaten B2 werden die ersten kodierten Bilddaten hintereinander in die zweiten kodierten Bilddaten B2 kopiert. Zudem können nahezu alle Signalisierungsparameter der ersten Signalisierungsdaten S11 einer der kodierten Eingangsvideoströme V11 direkt als die zweiten Signalisierungsdaten S2 übernommen werden. Lediglich diejenigen Signalisierungsparameter der zweiten Signalisierungsdaten S2, die in einer Abhängigkeit zu einer Anzahl an zweiten kodierten Bilddaten stehen, wie bspw. eine Bildgröße des durch die zweiten kodierten Bilddaten repräsentierten zweiten Bildes oder von Positionsangaben innerhalb des kodierten Ausgangsvideostroms, müssen angepasst werden.

Die einzelnen Schritte des Verfahrens werden mit Hilfe eines Mittels MM einer Vorrichtung V, VE ausgeführt. Das Mittel ist in Software, Hardware oder in einer Kombination aus Software und Hardware realisierbar und ausführbar. Die Vorrichtung kann in einer Videokonferenzkontrolleinheit verwendet werden. Ein weiteres Anwendungsgebiet ist eine Videoverteildiensteinheit, z.B. ein Videoserver, der bspw. mittels Streaming kodierte Videoinhalte mehrer kodierter Eingangsvideoströme in den kodierten Ausgangsvideostrom bspw. im Rahmen einer Videovorschau an ein oder mehrere Endgeräte überführt und dann übermittelt.

## Patentansprüche

1. Verfahren zum Erstellen eines kodierten Ausgangsvideostroms (V2) aus zumindest zwei kodierten Eingangsvideoströmen (V11, V12) zum gemeinsamen Darstellen von jeweils einem ersten Bild (P11, P12) der kodierten Eingangsvideoströme (V11, V12) in einem zweiten Bild (P2) des kodierten Ausgangsvideostroms (V2), bei dem
- die kodierten Eingangsvideoströme (V11, V12) jeweils erste kodierte Bilddaten (B11, B12) und jeweils erste Signalisierungsdaten (S11, S12) umfassen, wobei die jeweiligen ersten kodierten Bilddaten (B11, B12) jeweils für das erste Bild (B11, B12) kodierte Bildinformation aufweisen;
- der kodierte Ausgangsvideostrom (V2) und die kodierten Eingangsvideoströme (V12, V22) ein identisches Farbformat, eine identische Bitauflösung je kodiertem Bildpunkt und eine identische Bildabtastung aufweisen und mit einem identischen Videokodierverfahren kodiert werden;
- das Videokodierverfahren zumindest einen Kodiermodus (K1, K2) aufweist, bei dem die, das zweite Bild (P2) beschreibenden, zweiten kodierten Bilddaten (B2) des kodierten Ausgangsvideostroms (V2) in separierbare kodierte Teilbilddaten (TB1, TB2) einteilbar sind;
- der kodierte Ausgangsvideostrom (V2) mit zweiten Signalisierungsdaten (S2) und den zweiten kodierten Bilddaten (B2) derart erstellt wird, dass
- die zweiten kodierten Bilddaten (B2) durch Kopieren jeweils eines der ersten kodierten Bilddaten (B11, B12) gleichzeitig darzustellender erster Bilder (P11, P12) in jeweils eines der kodierten Teilbilddaten (TB1, TB2) des zweiten Bildes (P2) generiert werden;
- die zweiten Signalisierungsdaten (S2) zumindest teilweise auf Basis der ersten Signalisierungsdaten (S11, S12) generiert werden;
wobei die ersten Signalisierungsdaten (S11, S12) jeweils durch erste Signalisierungsparameter (SP11_1, SP11_2, SP12_1, SP12_2) und die zweiten Signalisierungsdaten (S2) durch zweite Signalisierungsparameter (SP2_1, SP2_2) dargestellt werden,
korrespondierende erste Signalisierungsparameter (SP11_1, SP12_1) der jeweiligen kodierten Eingangsvideoströme (V11, V12) dahingehend analysiert werden, ob diese einen identischen Parameterwert (PW) aufweisen, für den Fall, dass korrespondierende erste Signalisierungsparameter (SP11_1, SP12_1) den identischen Parameterwert (PW) aufweisen, der identische Parameterwert (PW) dem zu den analysierten ersten Signalisierungsparametern (SP11_1, SP12_1) korrespondierenden zweiten Signalisierungsparameter (SP2_1) zugewiesen wird, wobei ein jeweiliger erster Signalisierungsparameter, der jeweils einen Offset eines Quantisierungsparameters in den ersten Signalisierungsdaten (S11, S12) beschreibt, analysiert wird, falls zumindest zwei der analysierten ersten Signalisierungsparameter unterschiedlich sind, ein Unterschiedswert der analysierten ersten Signalisierungsparameter ermittelt wird, der Unterschiedswert als weiterer Signalisierungsparameter in einen zweiten Signalisierungsparameter der zweiten Signalisierungsdaten eingefügt wird, wobei der eingefügte Signalisierungsparameter denjenigen kodierten Teilbilddaten (TB1) zugeordnet wird, bei denen eine Addition des analysierten ersten Signalisierungsparameters in den ersten Signalisierungsdaten (S11) mit dem Unterschiedswert einem der anderen ersten analysierten Signalisierungsparameter entspricht, und und/oder ein jeweiliger erster Signalisierungsparameter, der jeweils eine maximale Anzahl an zu berücksichtigenden Referenzbildern in dem jeweiligen kodierten Eingangsstrom (V11, V12) beschreibt, in den ersten Signalisierungsdaten analysiert wird, derjenige Signalisierungsparameter aus den analysierten erster Signalisierungsparametern ausgewählt wird, der einen höchsten Parameterwert aufweist, der ausgewählte Signalisierungsparameter in die zweiten Signalisierungsdaten eingefügt wird,
und/oder ein jeweiliger Signalisierungsparameter, der jeweils eine explizite bzw. implizite Steuerung eines Deblocking-Filters beschreibt, in den ersten Signalisierungsdaten analysiert wird, wobei, falls sowohl explizite als auch implizite Steuerung durch das Analyseergebnis angezeigt wird, in die zu den kodierten Teilbilddaten gehörenden zweiten Signalisierungsdaten als Signalisierungsparameter die explizite Signalisierung eingefügt wird.

2. Verfahren nach einem der vorangehenden Ansprüchen, **dadurch gekennzeichnet, dass** die kodierten Eingangsvideoströme (V11, V12) jeweils mehrere erste Bilder (P11_1, P11_2, P12_1, P12_2) aufweisen, der kodierte Ausgangsvideostrom (V2) durch ein jeweiliges Erzeugen der für ein jeweiliges Bildpaar (P11_1, P12_1) der kodierten Eingangsvideoströme (V11, V12) gültigen zweiten Signalisierungsdaten (S2) und zweiten kodierten Bilddaten (B2) auf Grundlage von ersten Bilddaten (B11_1, B12_1) und ersten Signalisierungsdaten (S11_1, S12_1) erstellt wird.

3. Verfahren nach einem der vorangehenden Ansprüchen, **dadurch gekennzeichnet, dass** für ein zweites Bild (B2), bei dem die kodierten Teilbilddaten (TB1, TB2) übereinander angeordnet werden, zweite Signalisierungsparameter der zweiten Signalisierungsdaten für die unten angeordneten kodierten Teilbilddaten (TB2) derart generiert werden, dass eine Adresse eines ersten Bildblocks, insbesondere eines Makroblocks oben links, der unten angeordneten kodierten Teilbilddaten (TB2) aus einer um einen Wert Eins höheren Adresse eines letzten Bildblocks, insbesondere eines Makroblocks unten links, der oben angeordneten kodierten Teilbilddaten (TB1) generiert wird.

4. Verfahren nach einem der vorangehenden Ansprüche, **dadurch gekennzeichnet, dass** zur Erstellung der zweiten kodierten Bilddaten für das zweite Bild jeweils ein erstes Bild der kodierten Eingangsvideoströme derart ausgewählt wird, dass die zu den ersten Bildern gehörenden ersten kodierten Bilddaten in einem identischen Prädiktionsmodus, insbesondere INTER-Kodierung, INTRA-Kodierung oder bi-direktionale Kodierung, vorliegen.

5. Verfahren nach einem der vorangehenden Ansprüche, **dadurch gekennzeichnet, dass** als Kodiermodus (K1) des Videokodierverfahrens ein Slice-Modus gewählt wird, durch den Slice-Modus jeweils einem der kodierten Teilbilddaten (TB1, TB2) ein Slice (TB1, TB2) zugeordnet wird.

6. Verfahren nach einem der vorangehenden Ansprüche, **dadurch gekennzeichnet, dass** als Kodiermodus (K1) des Videokodierverfahrens ein Slice-Group-Modus gewählt wird, durch den Slice-Group-Modus jeweils einem der kodierten Teilbilddaten (TB1, TB2) eine Slice-Gruppe (TB1, TB2) zugeordnet wird.

7. Verfahren nach Anspruch 6, als Videokodierverfahren ein Standard ITU H.264 eingesetzt wird, wobei ein Slice-Group-Modus zum Bilden der kodierten Teilbilddaten verwendet wird.

8. Verfahren nach einem der vorangehenden Ansprüche, **dadurch gekennzeichnet, dass** als Kodierverfahren (KV) einer der Standards ITU H.264, ITU H.263 oder SVC verwendet wird.

9. Verfahren nach einem der vorangehenden Ansprüche, **dadurch gekennzeichnet, dass** die kodierten Eingangsvideoströme (V11, V12) durch Extraktion von Base Layer Information von SVC-kodierten Eingangströmen erzeugt werden.

10. Verfahren nach einem der vorangehenden Ansprüche, **dadurch gekennzeichnet, dass**
die kodierten Eingangsvideoströme (V11, V12) auf Basis einer Base Layer Information und zumindest einer Enhancement Layer Information von SVC-kodierten Eingangströmen erzeugt werden, wobei die Layer Informationen einen identischen Aufbau der örtlichen und SNR-Schichten (SNR-Signal-to-Noise_Ratio) aufweisen.

11. Verfahren nach einem der vorangehenden Ansprüche, **dadurch gekennzeichnet, dass** ein oder mehrere der kodierten Eingangsvideoströme zum Erstellen des kodierten Ausgangsvideostroms eingesetzt werden, die jeweils einen Signalisierungsparameter aufweisen, der angibt, dass eine Prädiktion zur Kodierung des jeweiligen ersten Bildes ausschließlich innerhalb einer Bildgrenze des ersten Bildes durchgeführt wurde.

12. Verfahren nach Anspruch 11, **dadurch gekennzeichnet, dass** der Signalisierungsparameter mit Hilfe einer SEI-Nachricht gemäß Videokodierstandard H.264 in folgender Form erzeugt wird:
mixing_info(payloadSize) {
constraint_inter_pred_flag
}
wobei das Feld "paylaodSize" eine Größe der SEI-Nachricht beschreibt und ein vorgebbarer Wert des Felds "constraint_inter_pred_flag" anzeigt, dass eine Prädiktion zur Kodierung des jeweiligen ersten Bildes ausschließlich innerhalb einer Bildgrenze des ersten Bildes durchgeführt wurde.

13. Vorrichtung (VE) zum Erstellen eines kodierten Ausgangsvideostroms (V2) aus zumindest zwei kodierten Eingangsvideoströmen (V11, V12) zum gemeinsamen Darstellen von jeweils einem ersten Bild (P11, P12) der kodierten Eingangsvideoströme (V11, V12) in einem zweiten Bild (P2) des kodierten Ausgangsvideostroms (V2), bei dem
die Vorrichtung (VE) zumindest ein Mittel (MM) aufweist, wobei dieses Mittel (MM) derart ausgestaltet ist, dass ein Verfahren nach einem der vorangehenden Ansprüche durchführbar ist.

14. Verwendung der Vorrichtung (VE) gemäß Anspruch 13, **dadurch gekennzeichnet, dass** die Vorrichtung (VE) in einer Videokonferenzkontrolleinheit (MCU) zur Verbindung von zumindest zwei Endgeräten (G1, G2, G3) verwendet wird.

## Claims

1. Method for establishing a coded output video stream (V2) from at least two coded input video streams (V11, V12), for joint representation of a first picture (P11, P12) of each of the coded input video streams (V11, V12) in a second picture (P2) of the coded output video stream (V2), in which
- the coded input video streams (V11, V12) each include first coded picture data (B11, B12) and first signalling data (S11, S12), the first coded picture data (B11, B12) in each case having picture information coded for the first picture (B11, B12);
- the coded output video stream (V2) and the coded input video streams (V12, V22) have an identical colour format, an identical bit resolution per coded pixel and an identical picture scanning, and are coded using an identical video coding method;
- the video coding method has at least one coding mode (K1, K2) wherein the second coded picture data (B2) - which describes the second picture (P2) - of the coded output video stream (V2) can be divided into separable coded sub-picture data (TB1, TB2);
- the coded output video stream (V2), with second control data (S2) and the second coded picture data (B2), is established in such a way that
- the second coded picture data (B2) is generated by copying one of the first coded picture data (B11, B12) of first pictures (P11, P12) to be shown simultaneously into one of the coded sub-picture data (TB1, TB2) of the second picture (P2);
- the second signalling data (S2) is generated at least partly on the basis of the first signalling data (S11, S12).
wherein the first signalling data (S11, S12) is represented by first signalling parameters (SP11_1, SP11_2, SP12_1, SP12_2) and the second signalling data (S2) is represented by second signalling parameters (SP2_1, SP2_2), corresponding first signalling parameters (SP11_1, SP12_1) of the appropriate coded input video streams (V11, V12) are analysed for whether they have an identical parameter value (PW) , for the case that corresponding first signalling parameters (SP11_1, SP12_1) have the identical parameter value (PW), the identical parameter value (PW) is assigned to the second signalling parameter (SP2_1) corresponding to the analysed first signalling parameters (SP11_1, SP12_1). wherein in each case a first signalling parameter, which describes an offset of a quantization parameter in the first signalling data (S11, S12), is analysed, and if at least two of the analysed first signalling parameters are different, a difference value of the analysed first signalling parameters is determined, and the difference value is inserted as a further signalling parameter into a second signalling parameter of the second signalling data, the inserted signalling parameter being assigned to that coded sub-picture data (TB1) in which addition of the analysed signalling parameter into the first signalling data (S11) corresponds to the difference value of one of the other analysed first signalling parameters, and/or in each case a first signalling parameter, which describes a maximum number of reference pictures to be taken into account in the coded input stream (V11, V12), is analysed in the first signalling data, the signalling parameter from the analysed first signalling parameters which has a highest parameter value is selected, and the selected signalling parameter is inserted into the second signalling data, and/or an appropriate signalling parameter, which describes an explicit or implicit control of a deblocking filter, is analysed in the first signalling data, wherein if both explicit and implicit control are indicated by the analysis result, the explicit signalling is inserted into the second signalling data belonging to the coded sub-picture data as signalling parameters.

2. Method according to one of the preceding claims, **characterised in that** the coded input video streams (V11, V12) each have multiple first pictures (P11_1, P11_2, P12_1, P12_2), and the coded output video stream (V2) is established by generating, in each case, the second signalling data (S2) and second coded picture data (B2) for a picture pair (P11_1, P12_1) of the coded input video streams (V11, V12), on the basis of first picture data (B11_1, B12_1) and first signalling data (S11_1, S12_1).

3. Method according to one of the preceding claims, **characterised in that** for a second picture (B2), where the coded sub-picture data (TB1, TB2) is arranged one above the other, second signalling parameters of the second signalling data are generated for the coded sub-picture data (TB2) which is arranged at the bottom, in such a way that an address of a first picture block, in particular a macroblock at top left, of the coded sub-picture data (TB2) which is arranged at the bottom is generated from an address, which is higher by a value one, of a last picture block, in particular of a macroblock at bottom left, of the coded sub-picture data (TB1) which is arranged at the top.

4. Method according to one of the preceding claims, **characterised in that** to establish the second coded picture data for the second picture, in each case a first picture of the coded input video streams is selected, in such a way that the first coded picture data belonging to the first pictures is present in an identical prediction mode, in particular INTER coding, INTRA coding or bidirectional coding.

5. Method according to one of the preceding claims, **characterised in that** as the coding mode (K1) of the video coding method, a slice mode is chosen, a slice (TB1, TB2) is assigned to each of the coded sub-picture data (TB1, TB2) by the slice mode.

6. Method according to one of the preceding claims, **characterised in that** as the coding mode (K1) of the video coding method, a slice group mode is chosen, a slice group (TB1, TB2) is assigned to each of the coded sub-picture data (TB1, TB2) by the slice group mode.

7. Method according to claim 6, **characterised in that** as the video coding method, a standard, ITU H.264, in which a slice group mode is used to form the coded sub-picture data, is used.

8. Method according to one of the preceding claims, **characterised in that**
one of the standards ITU H.264, ITU H.263 or SVC is used as the coding method (KV).

9. Method according to one of the preceding claims, **characterised in that** the coded input video streams (V11, V12) are generated by extraction of Base Layer Information from SVC-coded input streams.

10. Method according to one of the preceding claims, **characterised in that** the coded input video streams (V11, V12) are generated from SVC-coded input streams on the basis of a Base Layer Information and at least one Enhancement Layer Information, the extracted Layer Informations having an identical structure of the local and SNR (Signal-to-Noise Ratio) layers.

11. Method according to one of the preceding claims, **characterised in that** to establish the coded output video stream, one or more of the coded input video streams, which each have a signalling parameter indicating that a prediction for coding the first picture exclusively within a picture border of the first picture has been carried out, are used.

12. Method according to claim 11, **characterised in that** the signalling parameter is generated in the following form, using an SEI message according to video coding standard H.264:
mixing_info (payloadSize) {
constraint_inter_pred_flag
}
where the "payloadSize" field describes a size of the SEI message, and a specifiable value of the "constraint_inter_pred_flag" field indicates that a prediction for coding the first picture exclusively within a picture border of the first picture has been carried out.

13. Device (VE) for establishing a coded output video stream (V2) from at least two coded input video streams (V11, V12), for joint representation of a first picture (P11, P12) of each of the coded input video streams (V11, V12) in a second picture (P2) of the coded output video stream (V2), Wherein the device (VE) has at least one means (MM), wherein this means (MM) is in such a form that a method according to one of the preceding claims can be carried out.

14. Use of the device (VE) according to claim 13, **characterised in that** the device (VE) is used in a video conference control unit (MCU) to connect at least two terminals (G1, G2, G3).

## Revendications

1. Procédé permettant de créer un flux vidéo de sortie codé (V2) à partir d'au moins deux flux vidéo d'entrée codés (V11, V12) pour représenter ensemble une première image respective (P11, P12) des flux vidéo d'entrée codés (V11, V12) dans une seconde image (P2) du flux vidéo de sortie codé (V2), procédé dans lequel
- les flux vidéo d'entrée codés (V11, V12) comprennent des premières données d'image codées respectives (B11, B12) et des premières données de signalisation respectives (S11, S12), les premières données d'image codées respectives (B11, B12) comportant une information d'image codée pour la première image respective (B11, B12) ;
- le flux vidéo de sortie codé (V2) et les flux vidéo d'entrée codés (V12, V22) présentent un format couleur identique, une résolution binaire identique par pixel codé et un balayage d'image identique et ils sont codés avec un procédé de codage vidéo identique ;
- le procédé de codage vidéo comprend au moins un mode de codage (K1, K2) permettant de diviser les secondes données d'image codées (B2) décrivant la seconde image (P2) du flux vidéo de sortie codé (V2) en données d'image partielles codées (TB1, TB2) séparables ;
- le flux vidéo de sortie codé (V2) est créé avec des secondes données de signalisation (S2) et les secondes données d'image codées (B2) de manière à
- générer les secondes données d'image codées (B2) en copiant chaque fois une des premières données d'image codées (B11, B12) des premières images (P11, P12) devant être représentées simultanément dans chaque fois une des données d'image partielles codées (TB1, TB2) de la seconde image (P2) ;
- les secondes données de signalisation (S2) sont générées au moins en partie sur la base des premières données de signalisation (S11, S12) ;
sachant que les premières données de signalisation (S11, S12) sont représentées respectivement par des premiers paramètres de signalisation (SP11_1, SP11_2, SP12_1, SP12_2) et les secondes données de signalisation (S2) par des seconds paramètres de signalisation (SP2_1, SP2_2), des premiers paramètres de signalisation correspondants (SP11_1, SP12_1) des flux vidéo d'entrée codés respectifs (V11, V12) sont analysés pour déterminer s'ils ont une valeur de paramètre (PW) identique, si les premiers paramètres de signalisation correspondants (SP11_1, SP12_1) ont une valeur de paramètre (PW) identique, cette valeur de paramètre (PW) identique est associée au second paramètre de signalisation (SP2_1) correspondant aux premiers paramètres de signalisation (SP11_1, SP12_1) qui ont été analysés, sachant que un premier paramètre de signalisation respectif décrivant un décalage d'un paramètre de quantification dans les premières données de signalisation (S11, S12) est analysé, si au moins deux des premiers paramètres de signalisation analysés sont différents, une valeur de différence desdites premiers paramètres de signalisation analysés est déterminée, la valeur de différence est insérée comme autre paramètre de signalisation dans un second paramètre de signalisation des secondes données de signalisation, le paramètre de signalisation inséré étant associé aux données d'image partielles codées (TB1) où une addition du premier paramètre de signalisation analysé dans les premières données de signalisation (S11) avec la valeur de différence correspond à l'un des autres premiers paramètres de signalisation analysés, et/ou un premier paramètre de signalisation respectif décrivant un nombre maximal d'images de référence à prendre en compte dans le flux d'entrée codé respectif (V11, V12) est analysé dans les premières données de signalisation, parmi les premiers paramètres de signalisation analysés est sélectionné le paramètre de signalisation qui présente la valeur de paramètre la plus élevée, le paramètre de signalisation sélectionné étant inséré dans les secondes données de signalisation, et/ou un paramètre de signalisation respectif décrivant une commande explicite, respectivement implicite d'un « Deblocking-Filter » est analysé dans les premières données de signalisation, sachant que si le résultat d'analyse indique à la fois une commande explicite et implicite, la signalisation explicite est insérée dans les secondes données de signalisation faisant partie des données d'image partielles codées comme paramètre de signalisation.

2. Procédé selon l'une des revendications précédentes, **caractérisé en ce que** les flux vidéo d'entrée codés (V11, V12) comportent chacun plusieurs premières images (P11_1, P11_2, P12_1, P12_2),
le flux vidéo de sortie codé (V2) est créé en générant à chaque fois les secondes données de signalisation (S2) et secondes données d'image codées valides pour une paire d'images respective (P11_1, P12_1) des flux vidéo d'entrée codés (V11, V12) sur la base de premières données d'image (B11_1, B12_1) et premières données de signalisation (S11_1, S12_1).

3. Procédé selon l'une des revendications précédentes, **caractérisé en ce que** pour une seconde image (B2) où les données d'image partielles codées (TB1, TB2) sont superposées, on génère de seconds paramètres de signalisation des secondes données de signalisation pour les données d'image partielles codés (TB2) placées en bas, de manière à générer une adresse d'un premier bloc image, en particulier d'un macrobloc en haut à gauche, des données d'image partielles codés (TB2) placées en bas, à partir d'une adresse supérieure d'une valeur de un d'un dernier bloc image, en particulier d'un macrobloc en bas à gauche, des données d'image partielles codés (TB1) placées en haut.

4. Procédé selon l'une des revendications précédentes, **caractérisé en ce que** pour créer les secondes données d'image codées pour la seconde image, on sélectionne une première image respective des flux vidéo d'entrée codés de manière que les premières données d'image codées faisant partie des premières images se présentent sous un mode de prédiction identique, en particulier un codage inter, un codage intra ou un codage bidirectionnel.

5. Procédé selon l'une des revendications précédentes, **caractérisé en ce que** on choisit comme mode de codage (K1) du procédé de codage vidéo un mode slice, le mode slice permet d'associer aux données d'image partielles codées (TB1, TB2) respectivement un slice (TB1, TB2).

6. Procédé selon l'une des revendications précédentes, **caractérisé en ce que** on choisit comme mode de codage (K1) du procédé de codage vidéo un mode slice group, le mode slice group permet d'associer aux données d'image partielles codées (TB1, TB2) respectivement un slice group (TB1, TB2).

7. Procédé selon la revendication 6, **caractérisé en ce que** on utilise comme procédé de codage vidéo un standard ITU H.264, et on fait appel à un mode slice group pour former les données d'image partielles codées.

8. Procédé selon l'une des revendications précédentes, **caractérisé en ce que**
on utilise comme procédé de codage (KV) l'un des standards ITU H.264, ITU H.263 ou SVC.

9. Procédé selon l'une des revendications précédentes, **caractérisé en ce que** les flux vidéo d'entrée codés (V11, V12) sont générés par extraction d'une base layer information de flux d'entrée codés selon le standard SVC.

10. Procédé selon l'une des revendications précédentes, **caractérisé en ce que** les flux vidéo d'entrée codés (V11, V12) sont générés sur la base d'une base layer information et d'au moins une enhancement layer information de flux d'entrée codés selon le standard SVC, la base layer information présentant une construction identique des couches locales et SNR (SNR Signal-to-Noise Ratio).

11. Procédé selon l'une des revendications précédentes, **caractérisé en ce que** on utilise un ou plusieurs des flux vidéo d'entrée codés pour créer le flux vidéo de sortie codé, qui comportent chacun un paramètre de signalisation indiquant qu'une prédiction pour le codage de la première image respective a été effectuée exclusivement à l'intérieur d'une limite d'image de la première image.

12. Procédé selon la revendication 11,
**caractérisé en ce que** on génère le paramètre de signalisation à l'aide d'un message SEI selon le standard de codage vidéo H.264 sous la forme suivants :
mixing_info(payloadSize) {
constraint_inter_pred_flag
}
où le champ « payloadSize » décrit une grandeur du message SEI et où une valeur prédéfinissable du champ « constraint_inter_pred_flag » indique qu'une prédiction pour le codage de la première image respective a été effectuée exclusivement à l'intérieur d'une limite d'image de la première image.

13. Dispositif (VE) permettant de créer un flux vidéo de sortie codé (V2) à partir d'au moins deux flux vidéo d'entrée codés (V11, V12) pour représenter ensemble une première image respective (P11, P12) des flux vidéo d'entrée codés (V11, V12) dans une seconde image (P2) du flux vidéo de sortie codé (V2), le dispositif (VE) comprenant au moins un moyen (MM), le moyen (MM) étant configuré de manière à permettre la mise en oeuvre d'un procédé selon l'une des revendications précédentes.

14. Utilisation du dispositif (VE) selon la revendication 13, **caractérisé en ce que** le dispositif (VE) est utilisé dans une unité de contrôle pour visioconférence (MCU) pour relier au moins deux terminaux (G1, G2, G3).
